(19) Europäisches Patentamt European Patent Office Office européen des brevets

(11) **EP 4 390 504 A1**

(12) **EUROPEAN PATENT APPLICATION**

(43) Date of publication:
**26.06.2024  Bulletin 2024/26**

(21) Application number: **22216149.9**

(22) Date of filing: **22.12.2022**

(51) International Patent Classification (IPC):
**G02B 27/00** [(2006.01)]

(52) Cooperative Patent Classification (CPC):
**G02B 27/0006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ETH Zurich**
**8092 Zürich (CH)**

(72) Inventors:
• **Park, Hyunchul**
**8006 Zurich (CH)**
• **Poulikakos, Dimos**
**8702 Zollikon (CH)**

(54) **SUBSTRATE FOR PREVENTING A FLUID FROM MISTING AN ARTICLE**

(57)    A substrate (1) for preventing a fluid (2) from misting, in particular from fogging, an article (3) comprises at least one surface (4) comprising a surface structure (5). The surface structure (5) is formed by a plurality of protrusions (6) and a plurality of indentations (7) extending along an extension direction (E). The surface structure (5) is configured to generate capillary forces on a fluid (2) such, that the fluid (2) forms a fluid layer (8) among the surface structure (5).

FIG. 1c

EP 4 390 504 A1

Processed by Luminess, 75001 PARIS (FR)

**Description**

TECHNICAL FIELD

The present invention relates to a substrate for preventing a fluid from misting an article according to claim 1, to an article comprising such a substrate according to claim 9, to a method of producing such a substrate according to claim 11, and to the use of such a substrate in an article according to claim 15.

PRIOR ART

Humans can perceive nature through five senses: sight, hearing, smell, taste, and touch. Among them, the vision approximately takes charge of 70% of the total sensing for a human [1]. This visual information plays an important role in energy, safety, sanitation, and convenience in our daily life [2-6]. In real world, there are often situations where visual information is distracted by surface fogging caused by the condensation of omnipresent water molecules. Water molecules in a liquid state have a tendency to form a curved surface to minimize their surface energy due to the intrinsic property of high interfacial surface tension from hydrogen bonds between water molecules. These curvatures of the water droplets work like a lens that can easily diverge the coherence of the light by scattering the incident light [7]. For example, when taking a shower in the morning, warm water vapor immediately condenses on a mirror, and causes blurred vision such that one cannot recognize his own body clearly because the light is scattered by these droplets. Moreover, the loss of transparency in a window by the formation of unintended droplets gets even worse in extreme condensation conditions. For example, a transparent cookware lid gets immediately blurred and loses its transparency when it is exposed to boiling conditions.

To address this issue, most studies to date have focused on the optimizing wettability of surfaces by modifying surface chemistry such as polymers [8,9], inorganic materials [10,11], or surfactants [12-14]. Furthermore, modifications of surface wettability by adjusting surface roughness have drawn much attention to generating superhydrophilic [15,16], superhydrophobic surfaces, and its combination [17-21]. Although these surfaces have the opposite properties, they target the same goal of antifogging with different mechanisms. While superhydrophobic surfaces hate water and prevent fogging by repelling water droplets through droplet-jumping and/or sliding phenomena [22-24], superhydrophilic surfaces have a high affinity to water and strongly hold a continuous thin water film on a solid surface, preventing droplet formation [8,25]. As a result, they prevent the formation of water droplets on the solid surface, leading incident light transmits without being scattered and achieving high transparency. Although superhydrophobic surfaces in the field have been intensely studied in the last couple of decades, superhydrophilic surfaces have received relatively little attention.

SUMMARY OF THE INVENTION

It is an object of the present invention to provide an improved substrate that prevents a fluid from misting an article even under extreme conditions.

This object is achieved with a substrate according to claim 1. In particular, a substrate for preventing a fluid from misting, in particular from fogging, an article is provided. The substrate comprises at least one surface comprising a surface structure. The surface structure is formed by a plurality of protrusions and a plurality of indentations extending along an extension direction. The surface structure is configured to generate capillary forces on a fluid such, that the fluid forms a fluid layer among the surface structure.

That is, the substrate for preventing a fluid from misting such as fogging an article comprises a surface structure that is configured to generate capillary forces on the fluid such that the fluid forms a fluid layer among the surface structure, whereby a misting such as a fogging by the fluid is reduced or even prevented.

In other words, the surface structure is preferably configured to form a capillary-driven fluid layer. Again in other words, the surface structure is preferably configured to prevent the formation of fragmented or discrete fluid regions and instead promotes the formation of a continuous fluid layer that is sustained among the surface structure.

The curvature of fluid droplets diverges the coherence of incident electromagnetic radiation such as ambient light by scattering, reflecting, and refracting the incident light, which results in a misting such as fogging of an article. For instance, in the event of the article being a bathroom mirror, warm water vapour being generated upon showering immediately condenses on the mirror and causes a blurred vision because the light is scattered by the condensed water droplets. A loss of transparency of a transparent article such as a window, glasses or transparent cookware lid by the formation of unintended droplets gets even worse in extreme condensation conditions. For example, a transparent cookware lid gets immediately blurred and loses its transparency when it is exposed to boiling conditions.

In the present invention, the formation of a fluid layer reduces or prevents the formation of fragmented or discrete fluid regions on the substrate, whereby incident electromagnetic radiation is not scattered. As a result, a misting of the substrate such as a fogging of the substrate, and thus of an article comprising the substrate at least in the region of the substrate, by the fluid is reduced or even prevented even under extreme conditions such as boiling conditions.

The surface structure can be configured to generate capillary forces on the fluid that can overcome gravitational forces. In other words, the surface structure can be configured to generate capillary forces on the fluid such that the fluid layer is sustained within the surface structure and possibly additionally also overlaying the surface structure. That is, the capillary forces of the surface structure can be dominant over gravity. In other words, dimensions of the surface structure are preferably sufficiently small in order to exhibit a capillary effect dominantly. As a result, the fluid layer can be formed and sustained among the surface structure regardless of an orientation of the substrate with respect to gravity.

Furthermore, and as will be explained in greater detail below, in the event of the substrate being transparent the incident electromagnetic radiation can transmit through the substrate without being markedly scattered and while high transparency is maintained.

To this end, the protrusions and the indentations of the surface structure preferably constitute a geometrical confinement that exhibits a capillary effect on the fluid. In a sense, the protrusions can be seen as delimiting the indentations such that cavities or channels are formed, within which the fluid is retained because of the capillary effect, whereby the fluid layer is formed.

Apart from the protrusions and indentations the surface preferably corresponds to an even surface. Moreover, the surface can be a flat surface that extends along (fictitious) plane running perpendicularly to the extension direction or a curved surface.

The substrate is preferably at least partially and particularly preferably entirely optically transparent in the visible region and/or in the near-infrared region of the electromagnetic spectrum.

The substrate being partially or at least partially optically transparent in the visible region of the electromagnetic spectrum means that the substrate transmits electromagnetic radiation in the visible region, wherein some of the photons can be scattered at interfaces.

Likewise, the substrate being partially or at least partially optically transparent in the near-infrared region of the electromagnetic spectrum means that the substrate transmits electromagnetic radiation in the near-infrared region, wherein some of the photons can be scattered at interfaces.

The expression "partially or at least partially" optically transparent means that a human can distinguish or recognize objects being arranged behind the substrate.

The substrate being entirely optically transparent in the visible region and/or the near-infrared region of the electromagnetic spectrum means that the substrate allows said electromagnetic radiation to transmit essentially without being scattered.

The optical transparency preferably depends on the end-use of the substrate.

For instance, the substrate can be arranged on a car window, wherein the car window has an optical transparency of about 45 % in the visible region. In this case it is preferred that the substrate has an optical transparency of about 45 % or more in the visible region.

As another example, the substrate can be arranged on sunglasses, wherein the sunglasses have an optical transparency of about 5% such that the substrate preferably has an optical transparency of about 5% or more.

As another example, the substrate can be arranged on a cooking lid, wherein the cooking lid has an optical transparency of about 30% such that the substrate preferably has an optical transparency of about 30% or more.

To this end it is particularly preferred that the substrate has an optical transparency in the visible region and/or in the near-infrared region of the electromagnetic spectrum being at least 30 %, preferably above 30 % such as about 40 % or more, for instance 45 % or more or 60 % or more such as 80 % or more. For instance, common articles the substrate is to be arranged on such as glasses or plastic articles comprising or consisting of PMMA or PE have an optical transparency of more than 80%. As such, it can be said that the optical transparency of the substrate is preferably high.

The visible region of the electromagnetic spectrum is understood as comprising wavelengths in the region from about 380 nanometer to 750 nanometer.

The near-infrared region of the electromagnetic spectrum is understood as comprising wavelengths in the region from about 750 nanometer to 2500 nanometer.

The optical transparency is preferably determined by measuring the total transmittance of the substrate by irradiating the substrate with a light source and a photodetector providing an output corresponding to the luminosity response of the 1931 CIE Standard Colorimetric Observer with CIE Standard Illuminant C or, alternatively Illuminant A. The total transmittance of the substrate is defined as the ratio of transmitted radiant power to incident radiant power. The optical transparency can be determined from the total transmittance. For example, fused quartz has about 90% of the total transmittance. The total and diffuse transmittances are determined according to the ASTM standard test method D1003.

Additionally or alternatively, the substrate when being in the wet state preferably has a diffuse transmittance being less than 50% in the visible and/or near-infrared regions. Additionally or alternatively, the substrate when being in the dry state preferably has a diffuse transmittance being 50% in the visible and/or near-infrared regions. Regarding the diffuse transmittance, it can be said that said diffuse transmittance is preferably low such as 50 % or less, for instance 30 % or less such as 10% or less. The dry state of the substrate indicates a state where the substrate has no fluid layer being formed among the surface structure, and the wet state of the substrate indicates a state where the substrate is completely wet and has a fluid layer being formed among the surface structure.

Hence, the surface structure is preferably configured to keep the diffuse transmittance low in both dry and wet states of the substrate.

The diffuse transmittance is defined as the ratio of diffusely transmitted radiant power to the total transmitted radiant power. The diffuse transmittance is determined according to the ASTM standard test method D1003.

Additionally or alternatively, the substrate preferably has a haze being less than 50%, preferably 30% or less and particularly preferably 10% or less in the visible and/or near-infrared regions.

The haze of the substrate is defined as the ratio of the diffuse transmittance to the total transmittance. The haze is determined according to the ASTM standard test method D1003.

The surface structure, in particular the substrate, preferably is hydrophilic and/or oleophobic and/or has a water contact angle being less than 90°, more preferably being equal to or less than 60°, and particularly preferably being equal to or less than 30°. Alternatively, the surface structure, in particular the substrate, preferably is hydrophobic and/or oleophilic and/or has a water contact angle being greater than 90°, preferably being equal to or greater than 120°, and particularly preferably being equal to or greater than 150°.

Hence, at least the surface structure is preferably hydrophilic or hydrophobic or has a water contact angle being less than or greater than 90°. However, it is likewise conceivable that the entire substrate is hydrophilic or hydrophobic or has a water contact angle being less than or greater than 90°. In fact, and as will be explained in greater detail below, the surface structure can be integrally formed on and/or in the substrate, whereby the surface structure is part of the substrate and thus made of the same material as the substrate. Hence, explanations regarding the surface structure such as the hydrophobic or hydrophilic characteristics of the surface structure, a material of the surface structure, etc., made throughout this application preferably likewise apply to the surface comprising said surface structure and/or to the substrate and vice versa.

The surface structure is preferably hydrophilic or hydrophobic depending on the fluid.

To this end, it is particularly preferred that the surface structure is hydrophilic in the event that the fluid is polar. Hence, the hydrophilic surface structure is preferably configured to exhibit a capillary effect on a polar fluid such as water. In this case, the hydrophilic surface structure is preferably furthermore lyophilic.

However, it is likewise conceivable that the surface structure is hydrophobic in the event that the fluid is nonpolar. Hence, the hydrophobic surface structure is preferably configured to exhibit a capillary effect on a nonpolar fluid such as oil. The hydrophobic surface structure is preferably configured to exhibit a capillary effect on a nonpolar fluid, for instance an oleophilic fluid such as oil.

That is to say, the surface structure, in particular the substrate, preferably comprises or consists of a material that has a good wettability for the fluid in order not to repel the fluid but to generate the capillary forces on the fluid.

In other words, when the substrate shall prevent a polar fluid from misting, it is preferred that the surface structure, in particular the substrate, has a water contact angle being less than 90°, more preferably equal to or less than 60°, and particularly preferably equal to or less than 30° such as about 0°. For instance, in the event of the fluid being a polar fluid it is preferred that the surface structure has a water contact angle being as low as possible, in particular close to 0°.

Likewise, when the substrate shall prevent a nonpolar fluid from misting, it is preferred that the surface structure, in particular the substrate, has a water contact angle being greater than 90°, more preferably being equal to or greater than 120°, and particularly preferably being equal to or greater than 150° such as about 180°. For instance, in the event of the fluid being a nonpolar fluid it is preferred that the surface structure has a water contact angle being as high as possible, in particular close to 180°.

The water contact angle is determined according to the well-known sessile drop technique, in particular via sessile-drop goniometry, wherein an image of a drop of fluid on the surface is taken and the contact angle between the drop and surface from the image is determined by a fitting procedure.

It should be noted that various kinds of polar and nonpolar fluids are conceivable. For instance, conceivable polar fluids are aqueous fluids, for instance water or ethanol in water. Other examples of polar fluids are polar solvents, for instance acetone, methanol, isopropanol, acetonitrile, dimethyl sulfoxide (DMSO), dimethylformamide (DMF), etc.

For example, in the event of the fluid being water, i.e. a polar liquid, the water contact angle of the surface structure preferably is 5, whereby the fluid completely wets the surface structure of the substrate.

Conceivable nonpolar fluids are nonpolar solvents such as alkanes, for instance n-hexane, benzene, toluene, diethyl ether, chloroform, 1-4-dioxane, acetic acid, ethyl acetate, oily fluids for instance oil such as vegetable oil or motor oil, etc.

Thus, it is furthermore preferred that the surface structure is oleophobic or oleophilic in order to exhibit a capillary effect on a non-oily or oily fluid, for instance.

Additionally or alternatively, the fluid preferably is at least partially and preferably entirely optically transparent in the visible region of the electromagnetic spectrum.

It is furthermore preferred that the surface structure, in particular the substrate, is biocompatible and/or non-toxic.

The surface structure, in particular the substrate, can be made of various kinds of materials. To this end it is particularly preferred that the surface structure, in particular the substrate, comprises or consists of a transparent or semi-transparent material. Additionally or alternatively, the surface structure, in particular the substrate, can comprise or consist of at least one organic material and/or at least one inorganic material. For instance, the surface structure, in particular the substrate, can comprise or consist of glass, silicon dioxide, at least one polymer or copolymer thereof, etc.

Conceivable polymers are hydrophilic polymers or hydrophobic polymers.

Examples of hydrophilic polymers are natural and synthetic hydrophilic polymers.

Examples of natural hydrophilic polymers are cellulose, starch, agarose, inulin, chitosan, albumin and their derivatives.

Examples of synthetic hydrophilic polymers are poly(acrylamide), poly(acrylic acid), poly(ethylene oxide), poly(ethylene glycol), poly[(organo)phosphazenes], poly[N-(2-hydroxypropyl) methacrylamide], divinyl ether-maleic anhydride, poly(oxazoline), poly(vinyl pyrrolidone), poly(N-isopropylacrylamide), poly(vinyl alcohol) and their derivatives.

Examples of hydrophobic polymers are acrylic-based, ether-based, fluorocarbon-based, polystyrene-based, poly(vinyl chloride)-based, poly(N-vinylpyrrolidone)-based polymers.

The hydrophilic polymer is preferably soluble and/or swellable in water.

However, it is likewise conceivable that the surface structure, in particular the substrate, comprises or consists of at least one hydrophobic polymer or copolymer thereof. Examples of hydrophobic polymers are acrylic-based, ether-based, fluorocarbon-based, polystyrene-based, poly(vinyl chloride)-based, poly(N-vinylpyrrolidone)-based, polyethylene-based, polypropylene-based, polystyrene-based, acrylonitrile butadiene styrene-based, poly(vinyl chloride)-based, epoxy-based, polycarbonate-based, polyester-based, polyurethane-based, polyamide-based, polyacrylate-based, polyphenylene oxide-based, polyimide-based, polyether ether ketone-based, or fluorine contained polymers or copolymers thereof.

Moreover, the surface structure can comprise or consist of a hydrogel, preferably of a cross-linked hydrogel. The hydrogel preferably comprises or consists of at least one polymer, preferably a water-soluble and/or swellable and/or a cross-linked polymer.

As an example, the surface structure can comprise or consist of a poly(ethylene glycol) diacrylate hydrogel. In fact, biocompatible poly(ethylene glycol) diacrylate hydrogels are a preferred example because of their low toxicity, hydrophilic, absorbing properties, durability and easy processability that allows a facile generation of the surface structure via soft lithography, for instance, and as will be explained in greater detail below

A length of the protrusions and/or the indentations along the extension direction and with reference to a top side of the surface of the substrate preferably is in the range of 100 nanometer to 1000 micrometer, more preferably in the range of 1 micrometer to 500 micrometer. A distance between adjacent protrusions and/or adjacent indentations along a transverse direction running perpendicularly to the extension direction preferably is in the range of 100 nanometer to 1000 micrometer, more preferably in the range of 1 micrometer to 500 micrometer. A cross-section of the protrusions preferably is in the range of 100 nanometer to 1000 micrometer, more preferably in the range of 1 micrometer to 500 micrometer. A clear-width of the indentations preferably is in the range of 100 nanometer to 1000 micrometer, preferably in the range of 1 micrometer to 500 micrometer.

That is, the surface structure preferably is a nanostructure or a microstructure.

It is furthermore preferred that a size of the protrusions and/or indentations is such that they are invisible to the naked human eye.

Moreover, a size of the protrusions and/or indentations is preferably such that a fluid layer having a thickness ranging from 100 nanometer to 1000 micrometer along the extension direction is formed. In other words, a size of the protrusions and/or extensions is preferably such that a sufficient fluid layer is formed in order to avoid any instability from a massive influx of condensate and fog during vigorous condensation.

The protrusions and/or indentations can have various shapes such as cylindrical and/or polygonal shapes. In this case the protrusions and indentations can also be referred to as pillars or cavities, in particular as nanopillars or micropillars and as nanocavities or microcavities, respectively. However, it should be noted that many other shapes are likewise conceivable, such as rectangular shapes, conical shapes, etc. It is however preferred that the shape of the protrusions and/or indentations is such that edge effects are minimized. In this regard preferred shapes are rounded shapes, for instance cylindrical pillars.

Furthermore, the protrusions and/or the indentations can be arranged in a regular manner or a random manner. Various regular arrangements are conceivable, for instance a grid arrangement. However, it is likewise conceivable that the protrusions and/or indentations are randomly arranged. In any case it is preferred that the protrusions and/or indentations are provided as an array.

As an example: the surface structure can be provided by pillars having a diameter of 30 micrometer and a length along the extension direction, i.e. a height of 30 micrometer, and they can be disposed on a staggered array at a distance from one another, i.e. with a pitch of 30 micrometer.

Moreover, the protrusions and the indentations preferably confine fluid channels within which the fluid can flow. In other words, the fluid layer being formed by the surface structure preferably is a continuous fluid layer.

The surface preferably has a surface roughness with respect to the extension direction being 1000 micrometer or less, preferably 500 micrometer or less.

The protrusions and/or the indentations are preferably integrally formed on the surface. Being integrally formed means that the protrusions and/or the indentations and the surface are a single-piece element, i.e. monolithic. In fact, and as will be explained in greater detail below, the surface and the protrusions and/or the indentations and thus preferably the entire substrate are preferably made from one piece of material. For example, a patterned mould could be placed on top of a hydrogel precursor in order to obtain a substrate consisting of a hydrogel and comprising protrusions and indentations according to the pattern of the mould.

The substrate preferably is flexible such as bendable and/or stretchable.

As such, the substrate can be applied on curved or flexible articles such as a cookware lid, for instance. In this case, the substrate preferably has a surface being curved as mentioned initially.

The stretchable substrate preferably comprises or consists of a material having an elasticity, for instance a polyethylene glycol-based hydrogel.

Additionally or alternatively, said flexibility i.e. the bending or stretching ability, can likewise be provided by means of the thinness of the substrate. Namely, even very rigid materials like gold or silver can be flexible when they get thin. Therefore, the substrate can be made of a flexible such as soft material but it is likewise conceivable to provide a flexible substrate being made of a rigid material having a flexibility because of its thinness.

The substrate is preferably configured for de-misting, in particular de-fogging, in a passive manner. That is, the substrate allows a de-misting such as anti-fogging in a passive manner, i.e. in the absence of an energy input from a source of energy. Instead, the de-misting such as anti-fogging is achieved by the inherent properties of the substrate, in particular of the surface structure and its ability to form the fluid layer.

The substrate preferably further comprises at least one adherent element that is configured to adhere to the article and to thereby attach the substrate to the article.

Said adherent element is preferably arranged on the surface of the substrate, in particular on an underside of the surface of the substrate facing away from the protrusions and indentations. Said adherent element preferably can be a surface coating and/or be obtained in a surface treatment or the like.

For instance, the adherent element can be configured to covalently bond the substrate to the article. Another example is an adherent element being configured to adhere to the article via van der Waals forces originating from a dipolar attraction between the adherent element and the article.

The adherent element can be provided in the form of a film or coating. In fact, the adherent element can be an adherent film or a surface coating and/or can be obtained in a surface treatment.

Said surface coating preferably corresponds to a common coating method such as spray coating and/or dip coating in order to form an adhesive element that allows the substrate to be preferably releasably attached to the article. In this case it is furthermore preferred that the adhesive element is provided as an adhesive layer, for instance an acrylic adhesive layer. If such an adherent element is present it is furthermore preferred that the substrate furthermore comprises a protection element being removably arranged on the adherent element and which serves the purpose of preventing the adherent element from an unintentional adhering to objects not being the end-use article. For instance, the protection element could be a paper protective layer that can be peeled off from the adherent element for use. Said protection element can also be referred to as release liner.

It is furthermore conceivable that an adherent element is provided which comprises at least one coupling agent and that serves the purpose of enhancing a surface adhesion between the substrate and the article the substrate is to be arranged on. That is, the adherent element preferably comprises at least one coupling agent such as a silane that has been used as a surface coating material being formed on the surface of the substrate, in particular on the underside of the surface of the substrate for instance by solution or vapour phase deposition. In this case the adherent element preferably is an adherent layer, in particular a very thin molecular layer of self-assembly monolayer such as silane. Said adherent element or adherent layer preferably has the form of a linker being formed between the substrate and the article in order to connect the substrate to the article. Said connection is preferably achieved via a chemical bonding being established between both components, i.e. the substrate and the article. However, it is likewise conceivable that the adherent element or adherent layer is formed on the article only and defines an adherent surface i.e. sticky surface to be bonded to the substrate. That is, such an adherent element or adherent layer is preferably chemically bonded to the article but physically bonded to the substrate so that the substrate is detachable from the article.

However, it is likewise conceivable that the substrate is directly arranged on the article in the absence of an adherent element or that the substrate is an integral part of the article, see further below.

A refractive index of the surface structure, in particular of the substrate, is preferably matching a refractive index of the fluid layer being formed among the surface structure. Additionally or alternatively, a refractive index of the surface structure, in particular of the substrate, is preferably matching a refractive index of the article. Additionally or alternatively, a refractive index of the surface structure, in particular of the substrate, is preferably 2 or less, more preferably 1.5 or less such as about 1.3. Additionally or alternatively, a refractive index of the surface structure, in particular of the substrate, preferably essentially corresponds to the refractive index of liquid water.

That is, the surface structure, in particular the substrate, preferably has a refractive index that matches the refractive index of the fluid and/or of the article the substrate is to be provided on.

The expression "matching" is understood as the refractive index of the surface structure being within 20 % such as within 10 % or within 5 % of the refractive index of the fluid and/or of the article.

In particular, the closer the refractive indices the better the transmittance and the less scattering and refraction of incident electromagnetic radiation.

Hence, the material of the substrate is preferably selected with regard to the target fluid. For example, if the substrate is to prevent the misting, in this case the fogging, of water, the substrate preferably has a refractive index that matches the refractive index of water. That is, the substrate preferably has a refractive index of about 1.3.

The same applies with regard to the article, where matching indices between the substrate and the article also lead to improved transmittance and less scattering, etc.

In another aspect an article comprising at least one substrate as described above is provided. The article, at least in the region of the substrate, preferably is transparent or semi-transparent.

That is, the substrate is preferably provided on an article that shall be prevented from misting.

Various kinds of articles are conceivable, for instance mirrors, food packages, refrigerator doors, photovoltaic modules, cookware, transparent optical elements, eyewear, windshields, greenhouses, solar steamers, atmospheric water harvestings, desalinations to mention a view.

It is furthermore preferred that the article, at least in the region of the substrate, is transparent or semi-transparent.

The surface of the substrate is preferably directly or indirectly arranged on the article. Alternatively, the substrate is preferably an integral part of the article.

That is, the substrate can be a separate component that is arranged on the article. Alternatively, the substrate can be an integral part of the article, i.e. formed from or in the article.

In the former case, it is conceivable that the surface of the substrate is directly arranged on the article, and wherein the surface of the substrate is preferably in surface contact with a surface of the article. Said surface contact is preferably formed between an underside of the surface of the substrate facing away from the protrusions and indentations and a surface of the article. For instance, in the event of the article being a cookware lid it is preferred to arranged the underside of the surface of the substrate on an inner surface of the cookware lid such that the protrusions and indentations of the substrate face towards an interior of the cooking pot. However, it is likewise conceivable that the surface of the substrate is indirectly arranged on the article. Said indirect arrangement could be achieved, for instance, via an adherent element such as an adhesive film as mentioned earlier.

In the latter case of the substrate being an integral part of the article the substrate could be formed from or in the article, and wherein the surface of the substrate preferably is a surface of the article that comprises the surface structure. For example, in the event of the article being a cookware lid the surface structure could be formed in an inner surface of the cookware lid. In this case, the surface of the substrate is provided by said inner surface of the cookware lid, and wherein said inner surface of the cookware lid comprises the surface structure. For instance, when the article itself is mouldable or patternable the surface structure can be made directly in the article. Other possibilities involve subtractive methods such as etching or milling or laser cutting the surface structure into the article are likewise conceivable. In this case, the adherent element is preferably dispensed with.

In another aspect, a method of producing an article comprising at least one substrate as described above is provided, wherein the substrate is arranged on the article or is integrally formed in the article.

In another aspect, a method of producing a substrate, preferably a substrate as described above, is provide. The method comprises the step of providing at least one surface comprising a surface structure. The surface structure is formed by a plurality of protrusions and a plurality of indentations extending along an extension direction. The surface structure is configured to generate capillary forces on a fluid such, that the fluid forms a fluid layer among the surface structure.

Any statements made herein regarding the substrate or the article comprising the substrate preferably likewise apply to the method of producing the substrate an vice versa.

The surface comprising the surface structure is preferably formed from a precursor. To this end various types of precursors are conceivable.

In particular, the precursor can be a solution-type precursor, a powder-type precursor, or a solid-type precursor.

In the event of the precursor being a solution-type precursor or a powder-type precursor it is preferred that the surface comprising the surface structure is formed by lithography such as soft lithography, by spray-coating, by printing such as 3D printing, by stamping or in a roll-to-roll process.

In the event of the precursor being a solid-type precursor it is preferred that the surface comprising the surface structure is formed by etching, milling, laser cutting or in a moulding process.

That is, various ways of generating the surface comprising the surface structure, in particular the substrate, are conceivable. The particular manufacturing process preferably depends on the type of material(s) being used for generating the surface structure, in particular the substrate. It is furthermore preferred that said manufacturing processes are processes well-known in the art such as additive manufacturing methods or subtractive manufacturing methods, examples of which are lithography, spray-coating, printing, stamping, roll-to-roll processing, etching, milling, laser cutting, moulding, etc.

An advantage of certain manufacturing processes such as the roll-to-roll processing are the associated continuous manufacturing that allows a facile production of the substrates according to the invention in large numbers.

In any case it is preferred that the precursor is aligned with the target fluid the misting of which shall be prevented.

For instance, in the event of the target fluid being a polar fluid it is preferred that the precursor is hydrophilic, whereas in the event of the target fluid being a nonpolar fluid it is preferred that the precursor is hydrophobic.

As an example, it is conceivable to form the surface structure, in particular the substrate, from a solution-type precursor. If hydrophilic properties are desired, said solution-type precursor is preferably a hydrophilic solution that comprises, for example, at least one hydrophilic polymer or copolymer thereof.

Moreover, the hydrophilic solution preferably comprises at least one polar solvent, for instance water.

Likewise, in the event of the target fluid being a nonpolar fluid it is preferred that the solution-type precursor is a hydrophobic solution that comprises, for instance, at least one hydrophobic polymer or copolymer thereof.

Also in this case it is preferred that the hydrophobic solution preferably furthermore comprises at least one nonpolar solvent, for instance n-hexane, toluene, gasoline, diesel or other nonpolar components such as oils.

Regarding conceivable components such as conceivable hydrophilic or hydrophobic polymers reference is made to the previous explanations.

At this point it should be noted that a hydrophilic solution can be used in the event of a nonpolar target fluid, and wherein the resulting hydrophilic surface structure is rendered hydrophobic, and vice versa. Such a conversion is well-known in the art and could be achieved, for instance, via oxidation such as a remote oxygen plasma treatment, corona discharge, ozone treatment, etc.

Moreover, the solution-type precursor can comprise further agents such as at least one curing agent. The curing agent preferably serves the purpose of hardening the solution-type precursor. If a curing agent is used it is preferred to cure the precursor, for instance by UV- or thermal curing.

Various curing agents are conceivable as they are known in the art. For instance, the curing agent can be at least one of an aliphatic polyamine, aromatic amine, acid anhydride, carboylic acid, lewis acid, a base type curing agent, aminoplast, phenoplast resin, phenolic terminated epoxy resin and their derivatives, etc.

As an example, 2-Hydroxy-2-methyl-1-phenyl-propan-1-one (e.g. Darocur 1173 from Ciba Speciality Chemicals) has been used as curing agent.

For example, in the event of the precursor being a solution-type precursor comprising at least one polymer or copolymer thereof, an amount of the at least one polymer or copolymer thereof in the solution-type precursor preferably is between 50 % by weight to 90 % by weight of the polymer per total weight of the solution-type precursor, more preferably between 60 % by weight to 80 % by weight and particularly preferably about 70 % by weight of the at least one polymer or copolymer thereof per total weight of the solution-type precursor.

An amount of the curing agent in the solution-type precursor preferably is between 0.5 % by weight to 5 % by weight of curing agent per total weight of the solution-type precursor, more preferably between 1 % by weight to 4 % by weight and particularly preferably about 3 % by weight of the curing agent per total weight of the solution-type precursor.

For instance, a conceivable solution-type precursor comprises 70 % by weight of a polymer such as PEGDA and 3 % by weight of a curing agent such as Dacor 1173 per total weight of the solution-type precursor. The remainder of the solution-type precursor preferably being water, in particular deionized water.

In the event of the precursor being the powder-type precursor several processes are conceivable. For instance, it is conceivable to subject the powder-type precursor to a sintering or melting process wherein the powder of the powder-type precursor is melted, for instance with a laser or with heat, and is thereafter shaped. Another conceivable process is to inject the powder optionally with at least one binder and to solidify it by heat or UV.

However, it is likewise conceivable to melt the powder by the application of laser radiation or heat and to thereafter solidify the powder-type precursor as a whole, wherein no binder is present. In the event that a binder is used it is preferred that the adherent element such as the adhesive layer is dispensed and that the binder provides adhesive properties to the substrate instead.

As mentioned earlier, the powder-type precursor preferably comprises at least one powder. To this end various powders are conceivable, for instance metal-based powders, ceramic-based powders, polymer-based powders, etc. It is furthermore preferred that the powder is dispersed in a matrix or binder. The binder preferably is a polymeric binder. However, it is likewise conceivable that it is just the powder itself, in which case the powder-type precursor consists of the powder.

It should be noted that the powder-type precursor can be processed in analogy to the solution-type precursor. That is, at least some powders can be subjected to solution processes as it is the case with the solution-type precursor. For instance, the powder-type precursor can be applied to lithography, in particularly soft lithography as it is the case with the solution-type precursor, see further below. In this case it is preferred that the powder-type precursor comprises at least one polymeric binder.

In the event of the precursor being the solid-type precursor said solid-type precursor preferably consists of the material of the final surface comprising the surface structure, in particular of the final substrate. For example, if the final substrate is glass, the solid-type precursor preferably consists of glass, and wherein the surface structure is formed in said glass for example by etching, milling or laser cutting as it is well-known in the art. Another example is a solid-type precursor in the form of a solid thermoplastic, wherein the surface comprising the surface structure is formed in said solid thermoplastic by a thermal moulding process.

In a preferred embodiment the surface comprising the surface structure is generated by lithography, in particular by soft lithography. To this end it is preferred to generate at least one mould comprising a master surface structure, to place the mould over the solution-type precursor such that the master surface structure projects into the solution-type precursor, and to cure the solution-type precursor, whereby the surface comprising the surface structure is generated. As mentioned earlier, the powder-type precursor can be subjected to lithography as well. In this case it is preferred to melt the powder-type precursor in a first step and to thereafter place the mould over the melted powder-type precursor such that the master surface structure projects into the melted powder-type precursor, and to cure the melted powder-type precursor, whereby the surface comprising the surface structure is generated

That is, a preferred method of generating the surface structure is based on soft lithography. To this end it is preferred that a mould comprising a master surface structure is generated. Said mould comprising the master surface structure can be generated from a master precursor comprising a curing agent. For example, a mixture of polydimethylsiloxane (PDMS) as master precursor and the curing agent Darocur 1173 in a 10 : 1 ratio can be used. The mould comprising the master surface structure can be generated by other conventional methods such as conventional photolithography or e-beam lithography, for example, as well. It is furthermore preferred that freestanding moulds are replicated from the mould comprising the master surface structure. For example, freestanding moulds of PDMS can be fabricated by casting a liquid precursor on a master surface structure. Said liquid precursor preferably corresponds to the master precursor comprising a curing agent as mentioned above, e.g. a mixture of PDMS and Darocur 1173.

Once the mould and/or the replicated freestanding moulds comprising the master surface structure is generated, it can be used to generate the surface structure in the surface of the substrate.

To this end, a specified amount of the solution-type precursor (melted powder-type precursor) can be applied on a template surface or a target surface and the mould is placed over the solution-type precursor (melted powder-type precursor) such that the master surface structure projects into the solution-type precursor (melted powder-type precursor).

Thereafter, the solution-type precursor (melted powder-type precursor) is cured, whereby the surface comprising the surface structure of the substrate is generated.

The curing preferably corresponds to UV curing, wherein the solution-type precursor (melted powder-type precursor) and the mould are exposed to UV light. For instance, the solution-type precursor (melted powder-type precursor) and the mould could be irradiated with electromagnetic radiation having a wavelength of 350 nanometer and having a power of 15 Watt. Said irradiation can take place at room temperature and for a duration of 5 minutes. Other curings such as a thermal curing is likewise conceivable.

Depending on the desired end-use of the substrate the solution-type precursor (melted powder-type precursor) can be applied to a template surface, i.e. a surface that serves the sole purpose of generating the substrate, or to a target surface, i.e. a surface the substrate shall remain on in the end-use. Hence, said target surface preferably corresponds to a surface of the article, for instance to the inner surface of the cookware lid mentioned earlier.

In any case the precursor, i.e. the solution-type and/or the solid-type and/or the powder-type precursor, is preferably provided on a template surface and/or a target surface. The template surface and/or the target surface is preferably functionalized prior to the provision of the precursor on the template surface and/or the target surface. Additionally or alternatively, a surface adhesion of the template surface and/or the target surface is preferably enhanced prior to the provision of the precursor on the template surface and/or the target surface. The surface adhesion is preferably enhanced by providing at least one coupling agent on the template surface and/or the target surface.

That is, the precursor is preferably provided on the target surface such as a surface of the article and/or the template surface mentioned earlier.

Prior to the provision of the precursor on said template surface and/or target surface, it is preferred to functionalize said surface and/or to enhance a surface adhesion of said surface.

The template surface and/or target surface is preferably functionalized by methods well-known in the art, for instance by oxygen plasma treatment or silanization. To this end, it is particularly preferred that hydroxyl groups are formed on the target surface and/or on the template surface. Said hydroxyl groups are preferably configured to form covalent bonds with the precursor.

Additionally or alternatively, it is preferred to enhance a surface adhesion of the template surface and/or of the target surface prior to the provision of the precursor on the template surface and/or the target surface.

The surface adhesion of the template surface and/or target surface is preferably enhanced by methods well-known in the art as well, for instance by providing at least one coupling agent on the template surface and/or the target surface. In other words, the coupling agent preferably serves the purpose of enhancing a surface adhesion between the precursor and thus ultimately the substrate and the template surface and/or the target surface, for instance a surface of the article to be prevented from misting.

There are many types of coupling agents such as silanes, titanates, aluminates, bimetallics, phophates, borates, or chromium coupling agents. A conceivable example of a silane coupling agent is 3-(trimethoxysilyl)propyl methacylate (TMSPMA).

It is furthermore preferred that the coupling agent is provided to the target surface and/or the template surface in a solution, preferably in an aqueous solution. The aqueous solution preferably furthermore comprises at least one solvent, in particular a polar solvent such as ethanol.

An amount of the coupling agent in the aqueous solution preferably is between 0.5 % by weight of the cross-linking agent to 2.5 % by weight of the coupling agent per total weight of the aqueous solution, more preferably between 0.75 % by weight of the coupling agent to 2.25 % by weight of the coupling agent per total weight of the aqueous solution, and particularly preferably between 1 % by weight of the coupling agent to 2 % by weight of the coupling agent such as about 1.5 % by weight of the coupling agent per total weight of the aqueous solution. However, it should be noted that other concentrations of the couple agent can likewise be used and depend on the material of the substrate and of the end article.

An amount of the solvent in the aqueous solution preferably is between 0 % by weight of solvent to 100 % by weight of solvent per total weight of the aqueous solution, more preferably about 50 % by weight of solvent per total weight of the aqueous solution. That is, various amounts of solvents can be used such as 100 % by weight of pure ethanol working as well as 100 % by weight of pure water - however, it takes longer to enhance the surface adhesion for instance by forming silane on the target surface and/or the template surface in the latter case with pure water. The amount of solvent in the aqueous solution is preferably related to the duration and uniformity of the coupling agent.

For example, a preferred aqueous solution for enhancing the surface adhesion of the template surface and/or the target surface comprises 1.5 % by weight of coupling agent, for instance TMSPMA, and 50 % by weight of solvent, for instance ethanol per total weight of the aqueous solution, the remainder being water.

Hence, in summary it can be said that the method of producing the substrate preferably furthermore comprises the steps of:

i. Functionalizing the template surface and/or the target surface, preferably by oxygen plasma treatment and/or silanization;
ii. Enhancing the surface adhesion of the functionalized template surface and/or of the functionalized target surface preferably by providing at least one coupling agent to the template surface and/or the target surface - although commonly, the surface adhesion of the target surface is enhanced rather than of the template surface;
iii. Providing the precursor on the functionalized template surface and/or on the functionalized target surface whose surface adhesion has been enhanced;
iv. Placing the mould comprising the master surface structure over the precursor; and
v. Curing the precursor.

In another aspect, a substrate as described above and/or as prepared in the method as described above is used in an article for preventing a fluid from misting, in particular from fogging, the article.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

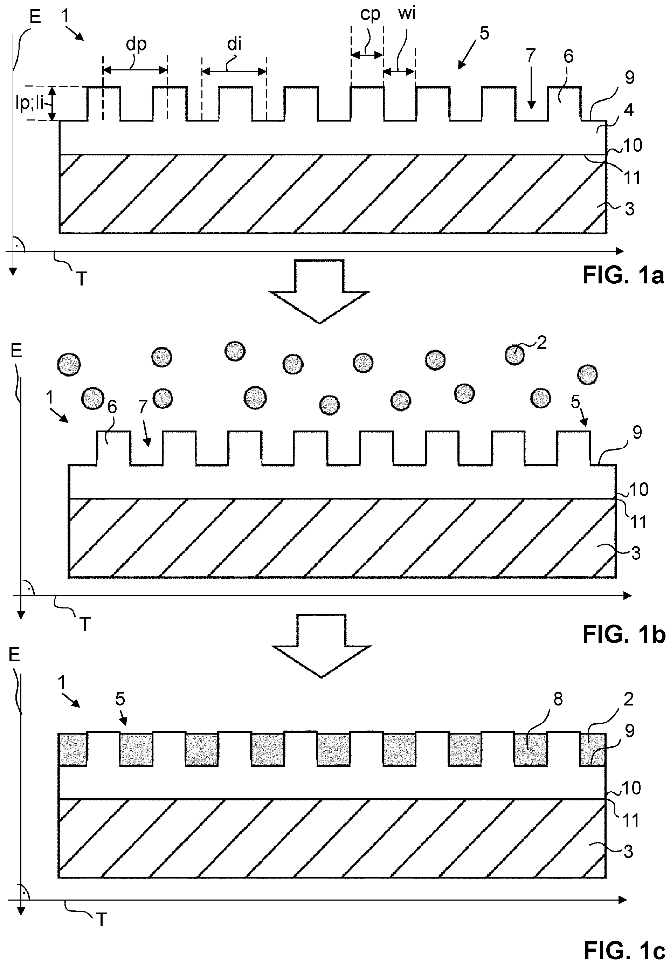

Figs. 1a-c     depict cross-sectional views through a substrate for preventing a fluid from misting an article according to the invention, wherein the formation of a fluid layer among the surface structure of the substrate by capillary forces exerted by the surface structure is illustrated;

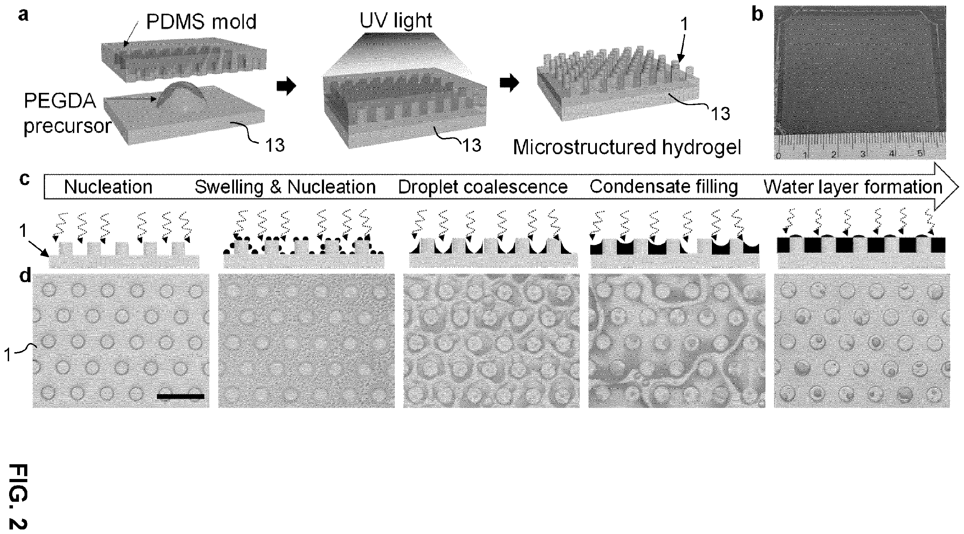

Figs. 2a-2d     illustrate the manufacturing of substrates according to the invention, wherein the substrates are transparent hydrogels exhibiting capillary forces, with panel a) depicting the manufacturing of the hydrogel substrate consisting of PEGDA (polyethylene glycol diacrylate) using soft lithography, which produces substrates on transparent flexible templates ($\approx 30$ cm$^2$) depicted in panel b); panels c-d) depict a schematic and image sequence taken with an optical microscope of the microstructured hydrogel substrate-which is being cooled-resulting in condensation and water layer formation; scale bars: 100 µm;

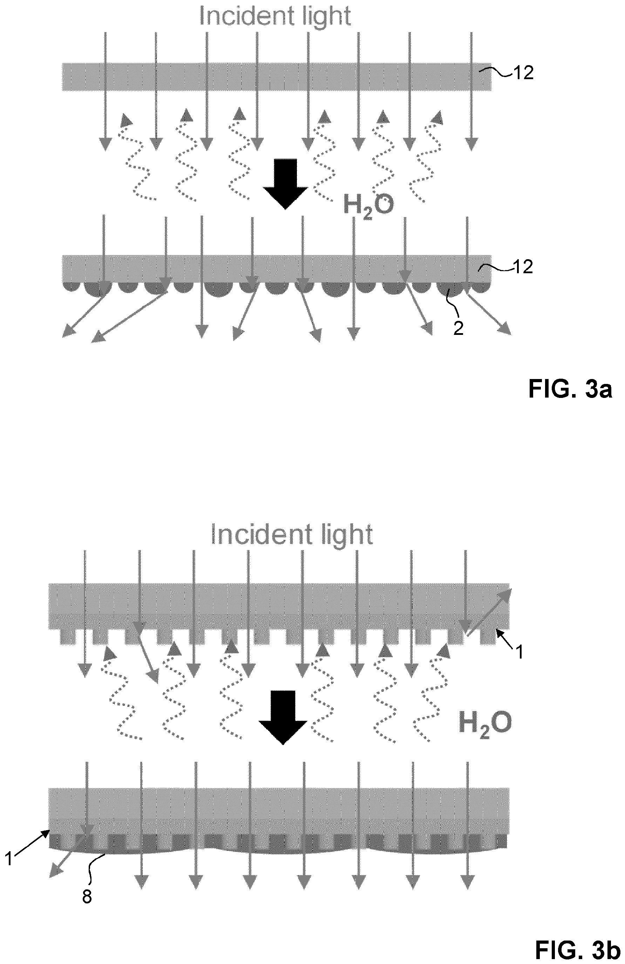

Figs. 3a-3f    illustrate substrates according to the invention in the form of microstructured hydrogels maintaining transparency in dry and fogged conditions with panel a) depicting a schematics showing how surface fog forms and its negative impact on light transmittance and how it can be addressed with the microstructured hydrogel substrates shown in panel b); panel c) depicts a schematics showing the behavior of incident light on tested samples; panels d) to f) depicting plots of total transmittance (d) diffuse transmittance (e), and haze (f) vs. wavelength for microstructured hydrogel substrates and polyethylene substrates in dry (dry state) and condensing (wet state) environments;

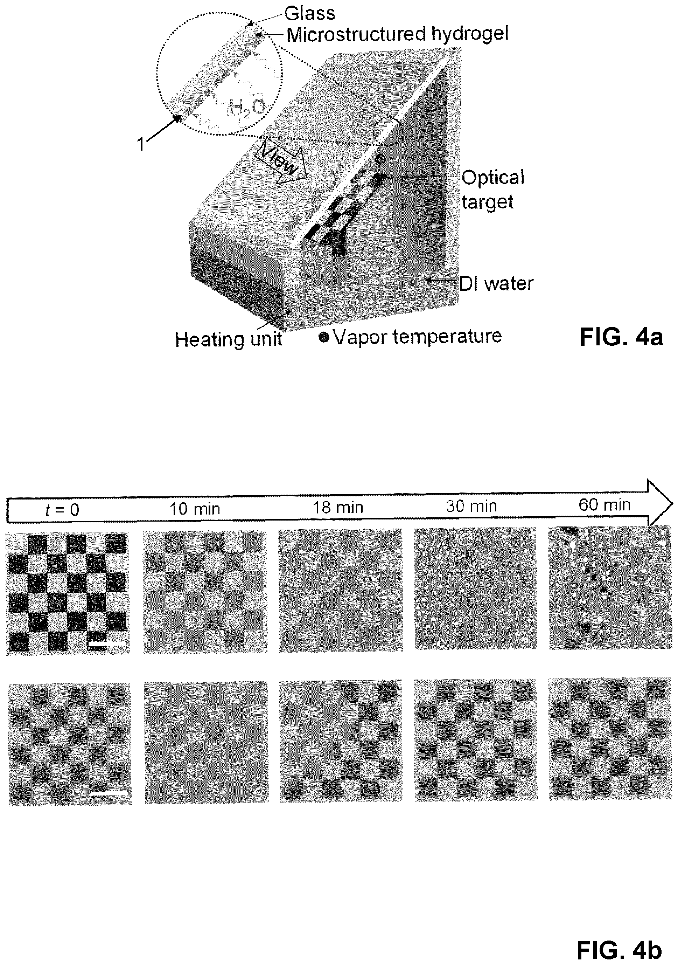

Figs. 4a-4d    quantify the visibility and condensate filling time of hydrogels with panel a) depicting a schematic showing the experimental setup used to induce condensation on the hydrogel and its visibility; panel b) depicting an image sequence showing the effect of microstructure on visibility in condensing environments: top-row, flat hydrogel; bottom-row, microstructured hydrogel; panel c) depicting corresponding contrast measurements of the experiments in panel b), also indicating different stages for the behavior on the microstructured hydrogel: adsorption, fogging, condensate filling, and the filmwise condensation state (wet state); panel d) depicting a plot of condensate filling time, $t_f$, vs. vapor temperature, $T_V$ for a microstructured hydrogel; scale bars: b, 8 mm;

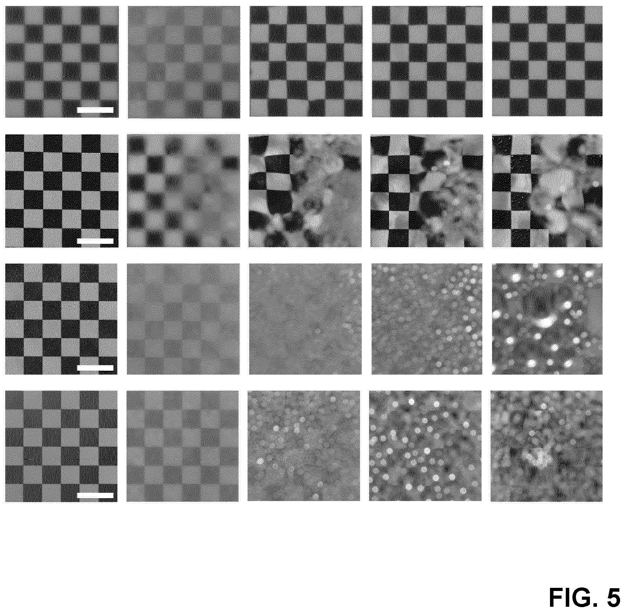

Figs. 5    illustrating that microstructured hydrogels maintain visibility under boiling conditions with panel a) depicting an image sequence that quantifies the visibility of a glass window coated with a: microstructured hydrogel, b: surfactant, c: commercially available superhydrophobic treatment (Glaco), and d: nothing (control) when exposed to the vapor from boiling water. scale-bar: a-d, 3 mm;

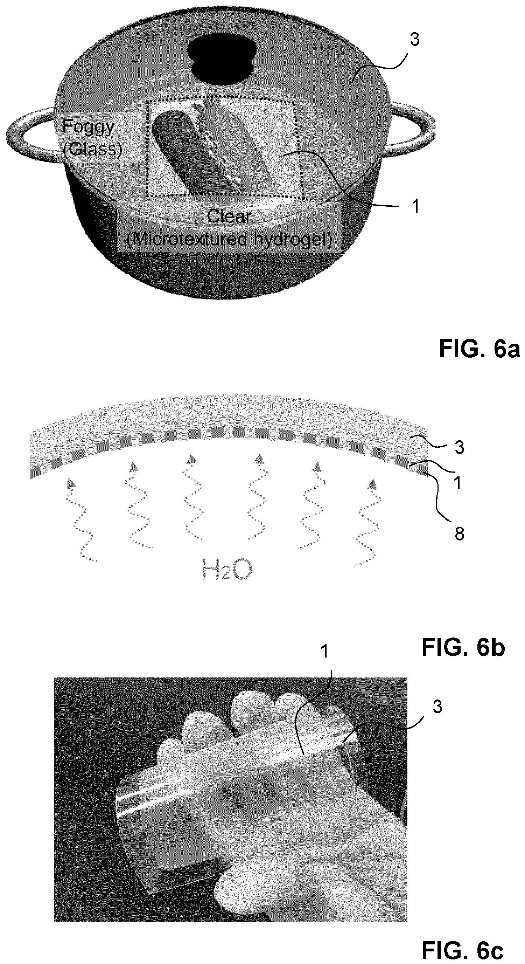

Figs. 6a-6d    illustrating the application of the substrate in the form of the microstructured hydrogel onto the curved surface of the commercial pot lid with panels a) and b) depicting a schematics of the cooking pot (a) and curved microstructured hydrogel surface (b); panel c) demonstrates the flexibility of the microstructured hydrogel coating on a polymer substrate; panel d) depicts an image sequence showing the performance of the microstructured hydrogel compared to the native lid surface while cooking vegetables;

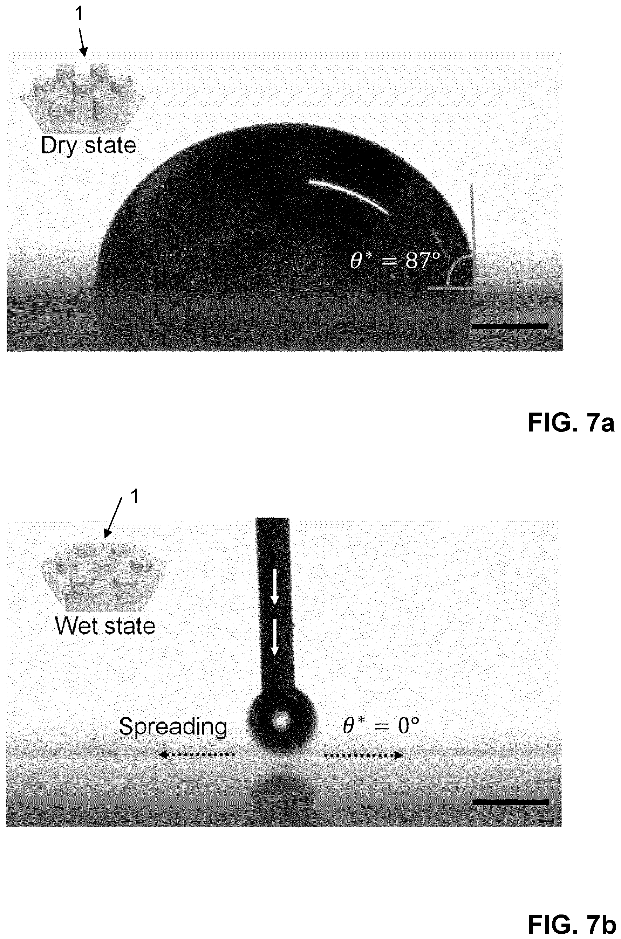

Figs. 7a-7b    illustrate the water droplet wetting behavior on the microtextured hydrogel in a dry state ($\theta^*= 87°$) (panel a) and in a wet state ($\theta^* \approx 0°$) (panel b), wherein the droplet immediate wicks; scale bars: 300 µm;

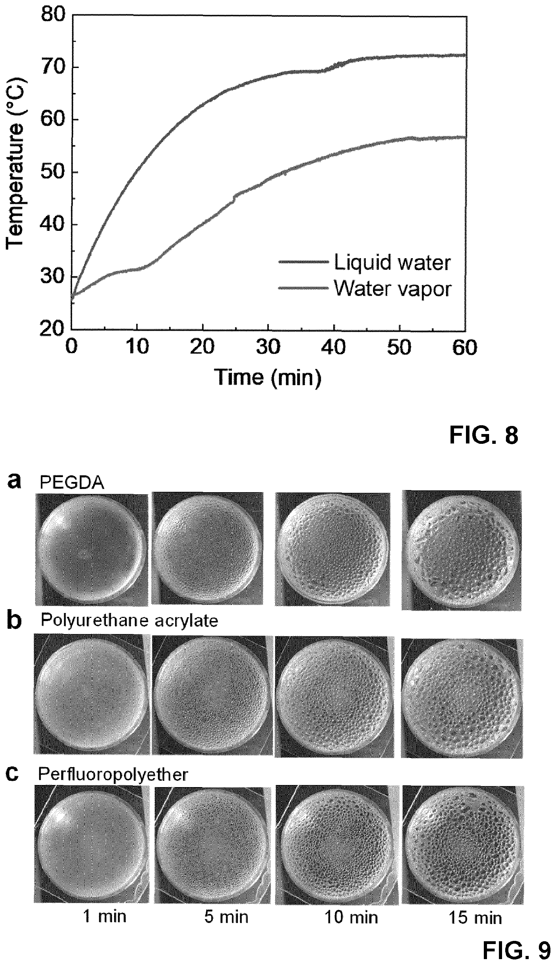

Fig. 8    depicts a plot temperature vs. time during the condensation under mild condition. The closed chamber containing liquid water was heated from 26 to 70 °C by a heat mat with a constant heat power (12 W). The temperature of water vapor is measured at a distance of 5 mm from the surface;

Fig. 9    illustrates the condensation behaviour of various other coatings compared to hydrogel, wherein the coatings are: PEGDA (panel a), polyurethane acrylate (panel b), and perfluoropolyether (panel c);

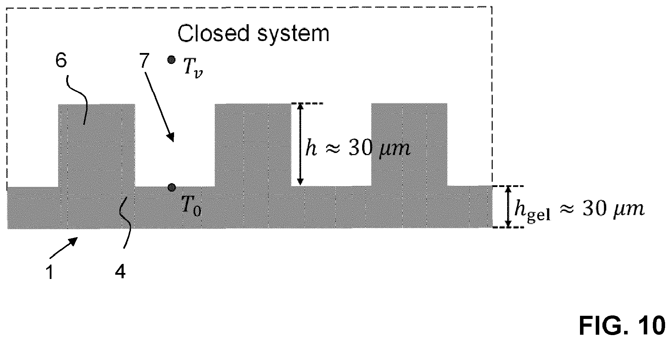

Fig. 10    depicts a schematics that illustrates the diffusion model used to calculate the condensation filling time.

DESCRIPTION OF PREFERRED EMBODIMENTS

With reference to figures 1a to 1c the general working principle of a substrate 1 according to the invention that prevents a fluid 2 from misting, in particular from fogging, an article 3, is explained.

The substrate 1 comprises a surface 4 extending along a (fictitious) plane and defining a top side 9 and an opposed underside 10. The surface 4 of the substrate 1 is here a flat surface 4. Said flat design of the surface 4, in particular of the entire substrate 1, originates in the depicted example from the flat design of the article 3 the substrate 1 is arranged on. Because of the flexible nature of the substrate 1, the substrate 1 could however likewise be arranged on a curved surface, see e.g. Figures 6a to 6d.

The underside 10 of the surface 4 is even and lacks any protrusions and indentations. The underside 10 is in surface contact with a surface 11 of the article 3, i.e. a target surface 11 the substrate 1 is to be arranged on. That is, in the depicted example, the substrate 1 is directly arranged on the article 3, in particular on the target surface 11 of the article 3.

The top side 9 of the surface 4 comprises a surface structure 5 being formed by a plurality of protrusions 6 and a plurality of indentations 7 extending along an extension direction E.

The protrusions 6 and the indentations 7 are integrally formed on the surface 4, i.e. the surface 4 comprising the protrusions 6 and the indentations 7 is a single-piece element, i.e. monolithic. In fact, the entire substrate 1 including its surface 4 with the surface structure 5 is made from one piece of material.

A length lp of the protrusions 6 and a length li of the indentations 7 along the extension direction E with reference to the top side 9 of the surface 4 is in the range of 100 nanometer to 1000 micrometer. A distance dp between adjacent protrusions 6 and a distance di between adjacent indentations 7 along a transverse direction T running perpendicularly to the extension direction E is in the range of 100 nanometer to 1000 micrometer. A cross-section cp of the protrusions 6 is in the range of 100 nanometer to 1000 micrometer. A clear-width wi of the indentations 7 is in the range of 100 nanometer to 1000 micrometer. That is, the surface structure can be seen as a surface pattern extending along two dimensions that run perpendicularly to the extension direction. Moreover, because of the nanometer or micrometer scales of the protrusions 6 and indentations 7 the surface structure 5 can be referred to as a nanostructure or a microstructure.

As follows from figures 1a to 1c, upon an impingement of droplets of fluid 2 the surface structure 5 is configured to generate capillary forces on the fluid 2 such, that the fluid 2 forms a fluid layer 8 among the surface structure 5. In particular, the protrusions 6 and the indentations 7 of the surface structure 5 constitute a geometrical confinement, wherein the protrusions 6 delimit the indentations 7 such that cavities or channels are formed, and which cavities or channels are configured to retain the fluid 2 because of the capillary effect, whereby the fluid layer 8 is formed.

With reference to the further figures, various aspects of the substrate 1 according to the invention and its capabilities are illustrated and explained in greater detail.

*The formation of a fluid layer in the form of a water layer with condensate on a substrate in the form of a microstructured hydrogel*

Figure 2a shows a schematic for the manufacturing process of a substrate 1 according to the invention. In the depicted example the substrate 1 corresponds to a transparent microstructured polyethylene glycol diacrylate (PEGDA) hydrogel. To fabricate a surface structure 5 in the form of a micropillar array with high resolution, we selected easily patternable PEG-based hydrogel as the main material and soft lithography as a method, which is generally used for the fabrication of microscale to nanoscale structures with high resolution. Regarding the geometry of microstructures 5, we considered the scale and shape of the surface structure 5. Firstly, we chose microscale rather than nanoscale to generate a sufficient water-buffer layer 8 to avoid the instability from the massive influx of condensate and fog during vigorous condensation. In harsh thermodynamic conditions, condensation occurs not only on the surface but also in the air and they form relatively large fog droplets in the air and these micro- or milli-scale water droplets 2 directly landing on the surface having a nanoscale roughness cannot keep the surface properties intact. Secondly, we designed a continuous water channel being delimited by the surface structure 5 in the form of a micropillar array, so that the condensed water 2 can be easily spread among the entire surface structure 5 and prevent any curved interface on the surface. We successfully created a substrate 1 in the form of a microstructured hydrogel on a template surface in the form of a polyester (PE) film with a surface structure 5 in the form of a large, patterned area ($50 \times 57$ mm2, Figure 2b).

To understand the evolution of condensation with a substrate 1 comprising a surface structure 5 in the form of a microstructured hydrogel, we conducted condensation tests under the microscope with a Peltier cooling setup (details in the section "method" given further below). As a result, Figure 2c and Figure 2d show successive schematics and microscopic images of condensation during fogging and forming a fluid layer 8 in the form of a water layer. Initially, the substrate 1 in the form of the hydrogel absorbs condensate and fog into its three-dimensional matrix and delays fogging. When the hydrogel reaches its intrinsic water capacity, condensation begins to occur on the surface structure 5 including the floor and around the pillars 6 constituting the surface structure 5. As condensation proceeds, we observed that droplets 2 quickly grow and coalesce with one another and the growth of spherical droplets 2 is limited by the confinement of pillars 6. Condensate starts to fill up the volume of spacing 7 between pillars 6 and finally forms a continuous layer 8 among the surface structure 5. As condensate filled up to the height of the pillar 6 (wet state) and the water 2 is strongly bounded by capillarity from geometrical confinement. Once the water layer 8 is formed, extra added droplets 2 immediately spread out toward all directions on the surface structure 5 in a wet state (see details in Figures 7a-7b). This is attributed to the continuous water layer 8 that has no interfacial friction between the condensate and the water layer 8.

*Optical transparency on microstructured hydrogel*

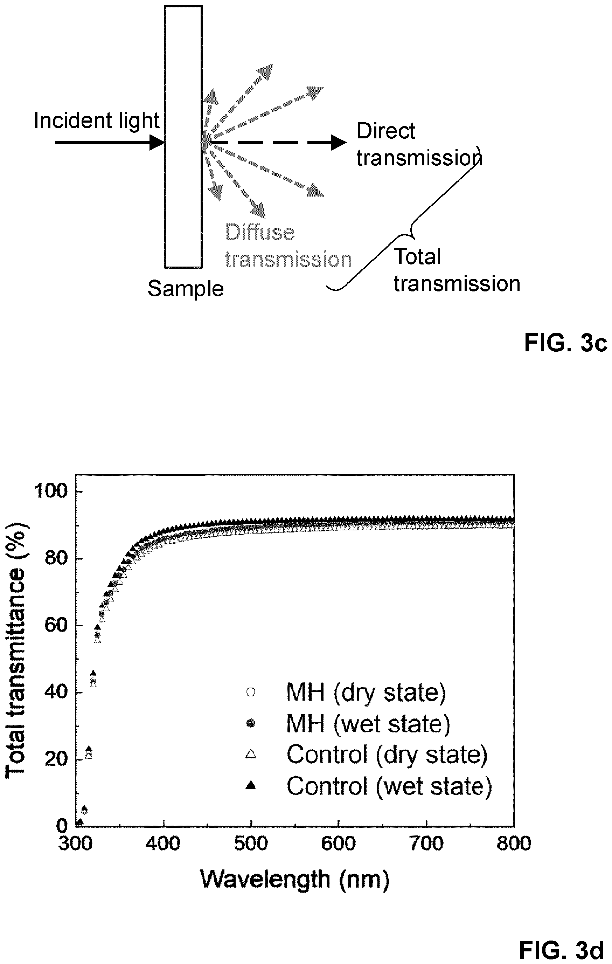

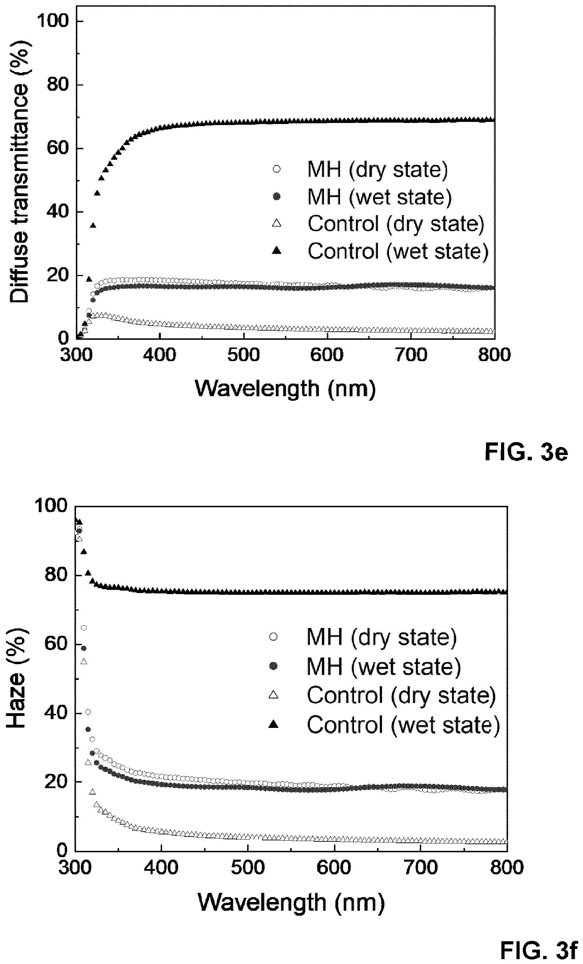

To characterize light scattering during condensation on both the substrate 1 comprising the surface structure 5 in the form of the microstructured hydrogel on a target surface 11 in the form of a PE film and the pristine PE film as a control surface 12, we measured the transmittance of samples before and after fogging by ultraviolet (UV)-vis-infrared (IR) spectroscopy. The dry-state samples were measured without exposure to moisture at room temperature and wet-state samples were prepared after exposure to a fog generator for 30 seconds. As soon as the control surface 12 is exposed to fog, it immediately starts to get blurred by forming droplets 2 on the control surface 12 (Figure 3a). In contrast, the microstructured surfaces 5 also get foggy initially but condensate turns into a water layer 8 within 30 seconds under the fog exposure by the fog generator (Figure 3b). Moreover, we investigated the spectral total, and diffuse transmittance of these samples (Figure 3c). The total transmission is the sum of direct and diffuse transmission ($T_{total} = T_{direct} + T_{diffuse}$). For higher visibility, high direct transmission and low diffuse transmission are required. The haze, which is defined as $H = T_{diffuse}/T_{total}$, is used to evaluate our surface structure 5 in accordance with the ASTM standard [26]. As shown in Figure 3d, we observe that the total transmittance of the control 12 and microstructured hydrogels 1 is around 90% in the visible range regardless of the state of the samples. However, the diffuse transmittance of the control sample 12 dramatically increases as they nucleate and grow droplets 2 on the control surface 12 (Figure 3e). The diffuse transmittance of the control surface 12 increases from 3.3% in the dry state to 68.2% in the wet state, which indicates most of the transmitted light is diffused, resulting in a high haze of 75% in the wet state (Figure 3f). On the other hand, the microstructured hydrogel 1 maintains a low diffuse transmittance regardless of the state of the sample, and rather, it slightly decreases the diffuse transmittance from 17.2 in the dry state to 16.6% in the wet state, manifesting the low haze of 18.5% in the wet state. It should be noted that although the control samples 12 become haze and invisible in the wet state, the substrate 1 according to the invention in the form of the microstructured hydrogel keeps the diffuse transmittance low in both dry and wet states.

*Analysis of transient behavior during condensation on the microstructured hydrogel*

Since hydrogels are hydrophilic and water-swollen polymers, we further investigate the effect of microstructures 5 of a hydrogel on water layer formation 8. We evaluated the visibility of a flat and a microstructured hydrogel 1 during condensation on a large scale.

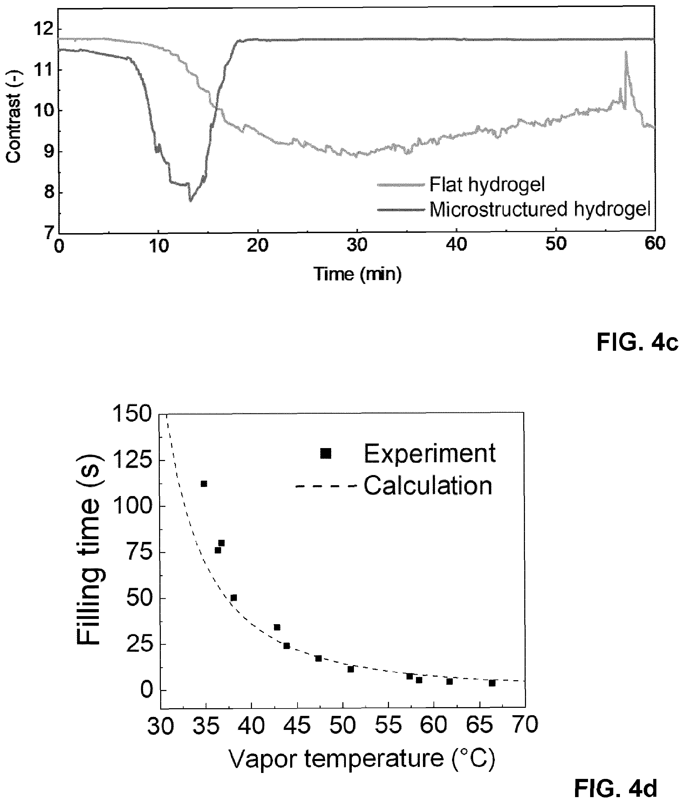

For this, we built our own measurement setup comprising a coated window, a boiling setup with a water container, a heating module, and an optical target in a closed chamber (Figure 4a). We employed a 45-degree tilted window to efficiently drain water 2 by gravity and an optical target with a checkered pattern to evaluate the visibility of our surface. The liquid water was heated from 26 to 70 °C with a constant heat power (12 W, details in Figure 8). Figure 4b shows successive images of condensation on windows 11 coated with flat and microstructured hydrogels 1. We found that flat PEGDA could prevent fogging for a short period of time due to its intrinsic water capacity of the hydrogel matrix, but it will eventually form droplets on the surface in mid- to long-term, resulting in the loss of optical transparency. We analyzed visual qualities, including the optical contrast and the degree of distortions (Figure 4c). The image contrast is computed using the root-mean-square difference of the intensity of each pixel from the mean intensity of the frame.

$$C = \sqrt{\frac{1}{MN}\sum_{i=0}^{N-1}\sum_{j=0}^{M-1}\left(I_{ij}-\bar{I}\right)^2} \qquad (1)$$

Where $I_{ij}$ is the $i$-th, $j$-th element of the two-dimensional image of size $M$ by $N$. $\bar{I}$ is the average intensity of all pixels in the image. Initially, both samples show fogging delay of 7 min due to the absorption of hydrogel which has a large water capacity of the three-dimensional porous matrix. Although the contrast of the flat sample slowly decreases, the contrast of the sample comprising the surface structure 5, i.e. the patterned sample 1 according to the invention decreases sharply, which indicates the amount of condensed liquid water in the patterned sample 1 is more than in the flat one so it scatters the incident light more than the flat one. Once the size of the coalesced droplet on the substrate 1 in the form of the patterned hydrogel becomes bigger than the distance dp between the pillars 6, it starts to fill the gap 7 up, leading to an increase in the contrast. Surprisingly, the contrast of this wet-state hydrogel 1 is even higher than the initial dry-state hydrogel 1 due to the difference in refractive index (RI) between water($n_{\text{water}}$ = 1.33) and PEGDA ($n_{\text{PEGDA}} \approx 1.45$) is smaller than RI difference between air ($n_{\text{air}}$ = 1.00) and PEGDA. Moreover, the extra condensate above the level of the pillars 6 flows down through the continuous water channel, resulting in stable visibility without distortion in the environment where extreme condensation occurs continuously. On the other hand, the contrast on the flat hydrogel is slightly better than the patterned one for the initial fogging stage, but fog on the surface steadily grows and eventually it loses its optical contrast. In a long term, the size of the droplet on the flat sample gets large and the droplets occasionally slide down through the tilted window, leading to an instant clearing of the window vis swiping phenomena, but the overall transparency of the flat sample was fluctuating and much worse than the patterned hydrogels.

The fogging prevention mechanism is closely related to the formation of water layer. We theoretically calculated the formation time of the water layer, $t_f$ by diffusion-driven condensation model within microscopic structures [27,28]

$$t_{\text{f}} = \alpha \frac{\rho h^2}{D\Delta c_{\text{sat}}} \qquad (2)$$

where D is the water vapor diffusivity in air, $\Delta c_{\text{sat}}$ is the water vapor concentration difference between the air above the surface and the bottom of the structure, the height, $h$ = 30 $\mu m$ and the density of liquid water, $\rho$ = 1000 kg m$^{-3}$ and we calculated the average empirical correlation coefficient, $\alpha$ = 17, from the experimental results. Figure 4d exhibits a plot of $t_{\text{f}}$ versus vapor temperature, $T_{\text{v}}$. In experiments, we found that as $T_{\text{v}}$ is close to boiling conditions, $t_{\text{f}}$ decreases exponentially and almost converges to several seconds because the concentration of hot vapor exponentially increases with $T_{\text{v}}$ increase. It is noted that the overall filling time in this vapor temperature range is less than 2 minutes and even shorter in boiling conditions ($t_f$ < 10 s). The trend shown in the theoretical model in this range of water vapor temperature is comparable with experimental data (details in Supplementary Note 1).

*Condensation behavior of hot water vapor with time on various surfaces under a boiling condition*

Figure 5 shows image sequences of the condensation behavior of a substrate 1 according to the invention in the form of the microstructured hydrogel, superhydrophobic, surfactant-based superhydrophilic and common glass substrates, respectively, under boiling conditions. Foremost, we observed that it only takes several seconds to fill up the microstructures 5 of the hydrogel 1 with condensate and keeps the surface transparent afterward. PEGDA consists of nanoscale pores the nucleation of water droplets 2 occurs through the whole polymeric matrix that condenses quickly compared to the rigid polymeric matrix (see details in Figure 9). In contrast, we observed that surfactant-coated surface has high optical contrast initially, but the visibility of the surface quickly becomes distorted as hot vapor and fog destroy the coatings. Both the superhydrophobic and glass surfaces exhibit immediate condensate formation, and we could observe droplet-jumping behavior on the superhydrophobic surface, but it does not recover much on its visibility. It should be noted that a vigorous environment is even beneficial for our microstructured hydrogel because it dramatically reduces the filling time of the bounded-water layer with condensate initially.

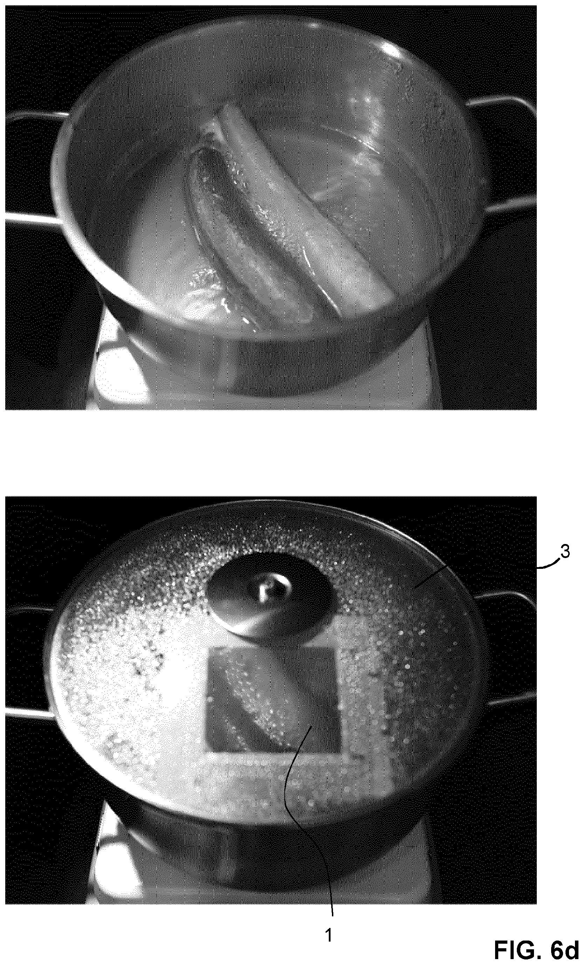

After evaluation of the superior anti-droplet performance under extreme conditions, we further investigate the practical application of the substrate 1 according to the invention in the form of the microstructured hydrogel. Therefore, we apply our microstructured hydrogel 1 on an article 3 in the form of a curved window of a commercially available cookware lid under boiling conditions (Figure 6a). We found that the substrate 1 according to the invention is applicable on a curved and flexible surface of an article 3 (Figure 6b and Figure 6c). Although the angle of the pot lid is less than 20°, extra condensate can be efficiently transported via the continuous water channel. To closely reproduce a real cooking environment, we boiled water 2 with a carrot and a zucchini in the pot (Figure 6d). As soon as we put the lid 3 with the substrate 1 according to the invention in the form of the microstructured hydrogel down on the pot, it forms droplets at the beginning and is fully covered by fog, making the window blurred. Remarkably, while the window recovered its visibility within 21 seconds in the area of the microstructured hydrogel, the control glass remains foggy and unclear in visibility.

*Conclusions*

In this work, we have demonstrated the practical antifogging strategy by a substrate 1 according to the invention that comprises a surface structure that is configured to generate capillary forces on a fluid 2 so as to form a fluid layer 8 among the surface structure 5 to prevent droplet formation under extreme thermodynamic conditions.

In particular, it is shown that a superhydrophilic surface structure 5 via a substrate 1 in the form of microstructured hydrogel keeps its transparency under heavy fogging conditions. The hygroscopic and robust hydrogel has extremely high affinity for water 2 and capillarity from its microstructures even enhances the binding of water layer providing an excellent superhydrophilicity leading to antifogging properties under aggressive fogging conditions.

Furthermore, we evaluated the visibility of the substrate 1 according to the invention and various commercial products including superhydrophobic, surfactant-based and glass substrates. Although other surfaces either immediately lose the transparency or deteriorate over time, the substrate 1 according to the invention keeps the highest visibility over time even under boiling conditions. Finally, we have successfully applied the substrate 1 according to the invention to an article 3 in the form of a transparent curved window of a commercially available cookware lid, and it clearly keeps its optical transparency during the boiling of water 2 with vegetables. As a result, we achieved a highly transparent window by the combination of excellent superwetting of hydrogel and its ultra-wicking surface structure 5, enhancing the water 2 retention on the surface structure 5. Employing theoretical considerations, we tailor the timescales for the formation of capillarity-driven fluid layer 8 among the surface structure 5 and analyzed the optical transmittance during extreme condensation on the substrate 1.

*Materials and methods*

*Materials*

We chose the biocompatible PEGDA hydrogel as the substrate 1 because it has hydrophilic, absorbing properties, low toxicity, durability and easy processability that allows us to make it easy to create a surface structure 5 in the form of microstructures via soft lithography. Moreover, the difference in RI between 70 wt% PEGDA in deionized water and liquid water is low[29,30], allowing to minimize the fraction of scattered light. PEGDA ($\underline{M}_n$ -700 g mol$^{-1}$) was purchased from Sigma Aldrich and used without further purification. We prepared 70 wt% PEGDA solution in DI water and 3wt% of photoinitiator (Darocur 1173, Ciba Specialty Chemicals) was added to the mixed precursor solution. Polydimethylsiloxane (PDMS; Sylgard 184, Dow Corning) was purchased for patterning microstructures via soft lithography and prepared with a mixture of base and curing agents (10:1 w/w). We purchased a silane coupling agent, 3-(Trimethoxysilyl)propyl methacylate (TMSPMA) to enhance the surface adhesion between PEGDA and template surfaces (PE film or glass). A commercially available superhydrophobic coating agent (Glaco, Soft99 Corporation) and a surfactant-based coating agent (Instant anti-fog, Arena) were purchased as control surfaces.

*Template surface preparation*

We used two different types of template surfaces 13 (PE, and glass) in this study. First, the template surfaces 13 are functionalized with hydroxyl groups by oxygen plasma treatment for 5 minutes after washing. Then, the plasma-treated template surface 13 is immersed in 1.5 wt% TMSPMA solution in ethanol-water cosolvent (50/50, w/w) for 2 hours. Then, the template surfaces 13 are rinsed with ample DI water and dried with nitrogen gas.

It should be noted that a target surface 11 of an article 3 the substrate 1 according to the invention is to be arranged on could be prepared in an analogous manner.

*Fabrication of microstructured hydrogel*

We designed and fabricated moulds comprising a master surface structure in the form of silicon masters for the microstructures by standard photolithography. We replicated freestanding moulds of PDMS from the micropatterned master after curing them in the oven at 80°C for 2 hours. Then, a couple of drops of PEGDA solution was dispersed on the pretreated template surfaces 13 (PE or quartz glass) and a micropatterned PDMS master mould was uniformly placed on top of the hydrogel precursor. We obtained microstructured hydrogel 1 on the template surface 13 after exposure to ultraviolet light for 5 min (with 15W power and 350 nm wavelength at room temperature). For simplicity, we fixed the geometrical dimensions of the surface structure 5 in the form of micropillars 6 throughout the entire tests. Pillars 6 have a diameter d = 30 $\mu$m and a height h = 30 $\mu$m, and they are disposed on a staggered array with a pitch p = 30 $\mu$m.

*Optical Characterization*

We measure the transparency of the substrate 1 in the form of the mircostructured hydrogels and controls using a UV-vis-IR spectrometer (Acton SP2500, Princeton Instruments). The total, diffuse transmittance and haze of a sample before and after droplet formation were measured according to ASTM D1003 "Standard Method for Haze and Luminous Transmittance of Transparent Plastics" [26]. We also analyzed contrast and distortion data from a series of videos at different heating conditions using MATLAB (The Mathworks Inc., Natick) programming techniques (details in Supplementary Note 2).

*Condensation test under microscopy*

The microscopic sequence during condensation on the substrates 1 in the form of the microstructured hydrogels 1 on PE films 13 was visualized using a microscope and a Peltier module (Laird MS2-192-14-20-11-18) attached to a heat sink. We attached the samples to the Peltier and the surface was cooled down with a cooling power of 11.5W at room temperature and RH 30%.

*Supplementary Note 1: Condensation filling time*

First, we assume that condensation on the substrate 1 according to the invention such as on the microstructured hydrogel is driven by a diffusion of water vapor on the surface and the relative humidity in the air immediately reaches 100% because experiments are conducted in the closed chamber with hot water vapor. We measured the temperatures, T, of water vapor at a distance of 5 mm from the surface structure and at the surface structure to calculate the condensation-induced filling time of condensate among the surface structure, in particular in the cavity between adjacent micropillars providing the surface structure and the geometrical information is given in Figure 10. We define the water vapor concentration difference as $\Delta C_{sat} = \rho_v$, - $\rho_b$, where $\rho_v$ and $\rho_b$, the density of water vapor in the air and on the surface structure, respectively, and can be calculated from the temperatures by using the empirical model, $\rho_v$ = 6.335 + 0.6718 $T$ - 2.0887 $\times$ 10$^{-2}T^2$ + 7.3095 $\times$ 10$^{-4}T^3$ The height, $h$ = 30 $\mu$m is assumed to be constant for simplicity in calculation. From the experimental data, we calculated the value of the average empirical correlation coefficient, $\alpha$ = 17, in the range of vapor temperature from 30°C to 70°C, which is corresponding to liquid temperature from 44 to 92 °C in the closed chamber Our scaling model suggests the water layer 8 formation time results from the vapor diffusion into the cavity 7 between the micropillars 6.

*Supplementary Note 2: Quantitative analysis of the scattering behavior over time*

Source videos encoded in H.264 at 30 fps are first decoded to the YCbCr color space and cropped to a square area enclosing the reference checkerboard with ffmpeg. A custom MATLAB script is then used to read the Y plane, which includes only the brightness information of the video, discarding color information. For each frame, the image contrast is computed using the RMS difference of the intensity of each pixel from the mean of the frame. At frame t for a pixel n of intensity $I_{t,n}$I, the contrast $C_t$ is defined as:

$$C_t = \sqrt{\frac{\sum_n^N \left(I_{t,n} - \overline{I_t}\right)^2}{N}}$$

where N is the number of pixels and $\overline{I_t}$ is the mean pixel intensity of the frame t. For correlation coefficients, a reference frame ref is first defined as the mean of the frames in the first 5 seconds of the video. The intensity of the pixel n of the reference frame is defined as:

$$I_{ref,n} = \frac{\sum_t^{T_5} I_{t,n}}{T_5}$$

where $T_5$ = 150 is the number of frames for the first 5 seconds. For every frame t in the video, its correlation coefficient $r_t$ with the reference frame is computed as:

$$r_t = \frac{\sum_n^N \left[\left(I_{t,n} - \overline{I_t}\right)\left(I_{ref,n} - \overline{I_{ref}}\right)\right]}{\sqrt{\left(\sum_n^N \left(I_{t,n} - \overline{I_t}\right)^2\right)\left(\sum_n^N \left(I_{ref,n} - \overline{I_{ref}}\right)^2\right)}}$$

where $I_{t,n}$ is the intensity of the pixel n at frame t. The contrast values and correlation coefficients over time are then reported in 5-second moving averages to reduce noise.

References

1 Morton Leonard Heilig, M. L. Presence: Teleoperators and Virtual Environments. Vol. 1 279-294 (MIT Press, 1992).

2 Agarwal, P. & Sharma, D. How to Prevent Fogging of Spectacle Glasses When Wearing a Face Mask. Indian J Surg 83, 1609-1610 (2021). https://doi.org:10.1007/s12262-021-02729-x

3 Introzzi, L. et al. "Wetting Enhancer" Pullulan Coating for Antifog Packaging Applications. Acs Appl Mater Inter4, 3692-3700 (2012). https://doi.org:10.1021/am300784n

4 Lu, X. Y. et al. Antifogging and antireflective silica film and its application on solar modules. Surf Coat Tech 206, 1490-1494 (2011). https://doi.org:10.1016/j.surfcoat.2011.09.031

5 Park, J. T., Kim, J. H. & Lee, D. Excellent anti-fogging dye-sensitized solar cells based on superhydrophilic nanoparticle coatings. Nanoscale 6, 7362-7368 (2014). https://doi. org:10.1039/c4nr00919c

6 San-Juan, M., Martin, O., Mirones, B. J. & De Tiedra, P. Assessment of efficiency of windscreen demisting systems in electrical vehicles by using IR thermography. Appl Therm Eng 104, 479-485 (2016). https://doi.org:10.1016/j.applthermaleng.2016.05.093

7 Beysens, D. & Knobler, C. M. Growth of Breath Figures. Phys Rev Lett 57, 1433-1436 (1986). https://doi.org:DOI 10.1103/PhysRevLett.57.1433

8 Lin, S. T. et al. Stretchable Anti-Fogging Tapes for Diverse Transparent Materials. Adv Funct Mater 31 (2021). https://doi.org:ARTN 210355110.1002/adfm.202103551

9 Wang, X. Q. et al. A multifunctional and environmentally-friendly method to fabricate superhydrophilic and self-healing coatings for sustainable antifogging. Chem Eng J 409 (2021). https://doi.org:ARTN 12822810.1016/j.cej.2020.128228

10 Lai, Y. K. et al. Transparent superhydrophobic/superhydrophilic TiO2-based coatings for self-cleaning and anti-fogging. J Mater Chem 22, 7420-7426 (2012). https://doi.org: 10.1039/c2jm 16298a

11 Hang, Z. W. et al. Active Antifogging Property of Monolayer SiO2 Film with Bioinspired Multiscale Hierarchical Pagoda Structures. Acs Nano 10, 8591-8602 (2016). https://doi.org: 10.1021/acsnano.6b03884

12 Duran, I. R. & Laroche, G. Current trends, challenges, and perspectives of anti-fogging technology: Surface and material design, fabrication strategies, and beyond. Prog Mater Sci 99, 106-186 (2019). https://doi.org:10.1016/j.pmatsci.2018.09.001

13 Han, Z. W., Feng, X. M., Guo, Z. G., Niu, S. C. & Ren, L. Q. Flourishing Bioinspired Antifogging Materials with Superwettability: Progresses and Challenges. Adv Mater 30 (2018). https://doi.org:ARTN 170465210.1002/adma.201704652

14 Wang, R. et al. Light-induced amphiphilic surfaces. Nature 388, 431-432 (1997). https://doi.org:Doi 10.1038/41233

15 Drelich, J., Chibowski, E., Meng, D. D. & Terpilowski, K. Hydrophilic and superhydrophilic surfaces and materials. Soft Matter 7, 9804-9828 (2011). https://doi.org:10.1039/c1 sm05849e

16 Zuo, Y. X., Zheng, L. Z., Zhao, C. & Liu, H. Micro-/Nanostructured Interface for Liquid Manipulation and Its Applications. Small 16 (2020). https://doi.org:ARTN 190384910.1002/smll.201903849

17 Blossey, R. Self-cleaning surfaces - virtual realities. Nat Mater 2, 301-306 (2003). https://doi.org:10.1038/nmat856

18 Mouterde, T. et al. Antifogging abilities of model nanotextures. Nat Mater 16, 658-+ (2017). https://doi.org:10.1038/Nmat4868

19 Papadopoulos, P., Mammen, L., Deng, X., Vollmer, D. & Butt, H. J. How superhydrophobicity breaks down. P Natl Acad Sci USA 110, 3254-3258 (2013). https://doi.org:10.1073/pnas.1218673110

20 Wang, D. H. et al. Design of robust superhydrophobic surfaces. Nature 582, 55-+ (2020). https://doi.org:10.1038/s41586-020-2331-8

21 Liu, M. J., Wang, S. T. & Jiang, L. Nature-inspired superwettability systems. Nat Rev Mater 2 (2017). https://doi.org:10.1038/natrevmats.2017.36

22 Donati, M. et al. Sprayable Thin and Robust Carbon Nanofiber Composite Coating for Extreme Jumping Dropwise Condensation Performance. Adv Mater Interfaces 8 (2021). https://doi.org:ARTN 200117610.1002/admi.202001176

23 Mulroe, M. D., Srijanto, B. R., Ahmadi, S. F., Collier, C. P. & Boreyko, J. B. Tuning Superhydrophobic Nanostructures To Enhance Jumping-Droplet Condensation. Acs Nano 11, 8499-8510 (2017). https://doi.org:10.1021/acsnano.7b04481

24 Sharma, C. S., Combe, J., Giger, M., Emmerich, T. & Poulikakos, D. Growth Rates and Spontaneous Navigation of Condensate Droplets Through Randomly Structured Textures. Acs Nano 11, 1673-1682 (2017). https://doi.org:10.1021/acsnano.6b07471

25 Otitoju, T. A., Ahmad, A. L. & Ooi, B. S. Superhydrophilic (superwetting) surfaces: A review on fabrication and application. J Ind Eng Chem 47, 19-40 (2017). https://doi.org:10.1016/j.jiec.2016.12.016

26 (ASTM International, West Conshohocken, PA, 2013).

27 Lambley, H., Schutzius, T. M. & Poulikakos, D. Superhydrophobic surfaces for extreme environmental conditions. P Natl Acad Sci USA 117, 27188-27194 (2020). https://doi. org:10.1073/pnas.2008775117

28 Mouterde, T. et al. Two recipes for repelling hot water. Nat Commun 10 (2019). https://doi.org:ARTN 141010.1038/s41467-019-09456-8

29 Torres-Mapa, M. L. et al. Fabrication of a Monolithic Lab-on-a-Chip Platform with Integrated Hydrogel Waveguides for Chemical Sensing. Sensors-Basel 19 (2019). https://doi.org:ARTN 433310.3390/s19194333

30 Zhang, Z. F., Ma, X. X., Wang, H. B. & Ye, F. Influence of polymerization conditions on the refractive index of poly( ethylene glycol) diacrylate (PEGDA) hydrogels. Appl Phys a-Mater 124 (2018). https://doi.org:ARTN 28310.1007/s00339-018-1713-3

LIST OF REFERENCE SIGNS

| 1 | substrate | 12 | control surface |
|---|---|---|---|
| 2 | fluid | 13 | template surface |
| 3 | article | | |
| 4 | surface | E | extension direction |
| 5 | surface structure | T | transverse direction |
| 6 | protrusion | lp | length protrusion |
| 7 | indentation | li | length indentation |
| 8 | fluid layer | dp | distance protrusion |
| 9 | top side | di | distance indentation |
| 10 | underside | cp | cross-section protrusion |

(continued)

| 11 | target surface | wi | clear-width indentation |

**Claims**

1. A substrate (1) for preventing a fluid (2) from misting, in particular from fogging, an article (3), comprising:

    - at least one surface (4) comprising a surface structure (5),

    wherein the surface structure (5) is formed by a plurality of protrusions (6) and a plurality of indentations (7) extending along an extension direction (E),
    **characterized in that** the surface structure (5) is configured to generate capillary forces on a fluid (2) such, that the fluid (2) forms a fluid layer (8) among the surface structure (5).

2. The substrate (1) according to claim 1, wherein the substrate (1) is at least partially and preferably entirely optically transparent in the visible region and/or in the near-infrared region of the electromagnetic spectrum.

3. The substrate (1) according to any one of the preceding claims, wherein the surface structure (5) is hydrophilic and/or oleophobic and/or has a water contact angle being less than 90°, more preferably equal to or less than 60°, and particularly preferably equal to or less than 30°, or
    wherein the surface structure (5) is hydrophobic and/or oleophilic and/or has a water contact angle being greater than 90°, preferably equal to or greater than 120°, and particularly preferably equal to or greater than 150°.

4. The substrate (1) according to any one of the preceding claims, wherein at least one of:

    - a length (lp) of the protrusions (6) and/or a length (li) of the indentations (7) along the extension direction (E) and with reference to a top side (9) of the surface (4) is in the range of 100 nanometer to 1000 micrometer,
    - a distance (dp) between adjacent protrusions (6) and/or a distance (di) between adjacent indentations (7) along a transverse direction (T) running perpendicularly to the extension direction (E) is in the range of 100 nanometer to 1000 micrometer,
    - a cross-section (cp) of the protrusions (6) is in the range of 100 nanometer to 1000 micrometer, or a
    - a clear-width (wi) of the indentations (7) is in the range of 100 nanometer to 1000 micrometer.

5. The substrate (1) according to any one of the preceding claims, wherein the protrusions (6) and/or the indentations (7) are integrally formed on the surface (4).

6. The substrate (1) according to any one of the preceding claims, wherein the substrate (1) is flexible such as bendable and/or stretchable, and/or
    wherein the substrate (1) is configured for de-misting, in particular de-fogging, in a passive manner.

7. The substrate (1) according to any one of the preceding claims, wherein the substrate (1) further comprises at least one adherent element that is configured to adhere to the article (3).

8. The substrate (1) according to any one of the preceding claims, wherein at least one of:

    - a refractive index of the surface structure (5) is matching a refractive index of the fluid layer (8) being formed among the surface structure (5);
    - a refractive index of the surface structure (5) is matching a refractive index of the article (3);
    - a refractive index of the surface structure (5) is 2 or less, preferably 1.5 or less such as about 1.3; or
    - a refractive index of the surface structure (5) essentially corresponds to the refractive index of liquid water.

9. An article (3) comprising at least one substrate (1) as claimed in any one of the preceding claims,
    wherein the article (3), at least in the region of the substrate (1), preferably is transparent or semi-transparent.

10. The article (3) according to claim 9, wherein the surface (4) of the substrate (1) is directly or indirectly arranged on the article (3), or

wherein the substrate is an integral part of the article.

11. A method of producing a substrate (1), preferably a substrate (1) as claimed in any one of claims 1 to 8, the method comprising the step of:

- Providing at least one surface (4) comprising a surface structure (5),

wherein the surface structure (5) is formed by a plurality of protrusions (6) and a plurality of indentations (7) extending along an extension direction (E),
**characterized in that** the surface structure (5) is configured to generate capillary forces on a fluid (2) such, that the fluid (2) forms a fluid layer (8) among the surface structure (5).

12. The method according to claim 11, wherein the surface (4) comprising the surface structure (5) is formed from a precursor and wherein:

- the precursor is a solution-type precursor or a powder-type precursor, and
wherein the surface (4) comprising the surface structure (5) is preferably formed by lithography, spray-coating, printing, stamping or in a roll-to-roll process; or
- the precursor is a solid-type precursor, and

wherein the surface (4) comprising the surface structure (5) is preferably formed by etching, milling, laser cutting or in a moulding process.

13. The method according to claim 12, wherein the surface (4) comprising the surface structure (5) is formed by lithography, preferably soft lithography, and by the steps of:

- generating at least one mould comprising a master surface structure,
- placing the mould over the solution-type precursor and/or the powder-type precursor after being melted such that the master surface structure projects into the solution-type precursor and/or the melted powder-type precursor, and
- curing the solution-type precursor and/or the powder-type precursor, whereby the surface (4) comprising the surface structure (5) is generated.

14. The method according to claim 12 or 13, wherein the precursor is provided on a template surface (13) and/or a target surface (11), and

wherein the template surface (13) and/or the target surface (11) is functionalized prior to the provision of the precursor, and/or
wherein a surface adhesion of the template surface (13) and/or the target surface (11) is enhanced prior to the provision of the precursor.

15. Use of a substrate (1) according to any one of claims 1 to 8 and/or as prepared in the method according to any one of claims 11 to 14 in an article (3) for preventing a fluid (2) from misting, in particular from fogging, the article (3).

FIG. 1a

FIG. 1b

FIG. 1c

FIG. 2

FIG. 3a

FIG. 3b

FIG. 3c

FIG. 3d

FIG. 3e

FIG. 3f

FIG. 4a

FIG. 4b

**FIG. 4c**

**FIG. 4d**

FIG. 5

Foggy
(Glass)

Clear
(Microtextured hydrogel)

3

1

**FIG. 6a**

3

1

8

H₂O

**FIG. 6b**

1

3

**FIG. 6c**

FIG. 6d

FIG. 7a

FIG. 7b

**FIG. 8**

**FIG. 9**

Closed system

6  7  • $T_v$

$h \approx 30\ \mu m$

$T_0$

$h_{gel} \approx 30\ \mu m$

1  4

FIG. 10

Europäisches
Patentamt

European
Patent Office

Office européen
des brevets

# EUROPEAN SEARCH REPORT

Application Number

EP 22 21 6149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/156431 A1 (SUTO KAZUHIKO [JP] ET AL) 21 June 2012 (2012-06-21) * paragraphs [0021] – [0023], [0043] – [0128]; figures 1-8 * | 1-15 | INV. G02B27/00 |
| X | US 2003/179476 A1 (KOBAYASHI MASAKI [JP] ET AL) 25 September 2003 (2003-09-25) * paragraph [0026]; figures 1-4 * | 1,2, 9-11,15 | |
| X | EP 2 947 483 A1 (DEXERIALS CORP [JP]) 25 November 2015 (2015-11-25) * paragraph [0104]; figures 1,2,12 * | 1,2,6, 9-11,15 | |
| X | US 2013/112567 A1 (OZAWA SATORU [JP] ET AL) 9 May 2013 (2013-05-09) * paragraphs [0181] – [0189]; figures 1-4 * | 1,2,6, 9-11,15 | |
| X | JP 2008 158293 A (NISSAN MOTOR) 10 July 2008 (2008-07-10) * paragraphs [0001], [0016], [0025] – [0028]; figures 1-6 * | 1,2, 11-15 | TECHNICAL FIELDS SEARCHED (IPC)  G02B |
| X | JP 2014 141085 A (DAINIPPON PRINTING CO LTD) 7 August 2014 (2014-08-07) * paragraphs [0046] – [0049]; figure 1 * | 1,2,6,7, 9-11,15 | |

The present search report has been drawn up for all claims

| Place of search | Date of completion of the search | Examiner |
|---|---|---|
| Munich | 5 June 2023 | Baur, Christoph |

EPO FORM 1503 03.82 (P04C01)

## ANNEX TO THE EUROPEAN SEARCH REPORT
## ON EUROPEAN PATENT APPLICATION NO.

EP 22 21 6149

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2023

| Patent document cited in search report | | Publication date | Patent family member(s) | | | Publication date |
|---|---|---|---|---|---|---|
| US 2012156431 | A1 | 21-06-2012 | JP | 2011053334 | A | 17-03-2011 |
| | | | US | 2012156431 | A1 | 21-06-2012 |
| | | | WO | 2011024947 | A1 | 03-03-2011 |
| US 2003179476 | A1 | 25-09-2003 | CN | 1401086 | A | 05-03-2003 |
| | | | EP | 1405718 | A1 | 07-04-2004 |
| | | | JP | WO2002100633 | A1 | 24-09-2004 |
| | | | US | 2003179476 | A1 | 25-09-2003 |
| | | | WO | 02100633 | A1 | 19-12-2002 |
| EP 2947483 | A1 | 25-11-2015 | EP | 2947483 | A1 | 25-11-2015 |
| | | | JP | 2014155689 | A | 28-08-2014 |
| | | | US | 2015323704 | A1 | 12-11-2015 |
| | | | WO | 2014112555 | A1 | 24-07-2014 |
| US 2013112567 | A1 | 09-05-2013 | CN | 103025923 | A | 03-04-2013 |
| | | | JP | 5796491 | B2 | 21-10-2015 |
| | | | JP | WO2012014774 | A1 | 12-09-2013 |
| | | | KR | 20130033412 | A | 03-04-2013 |
| | | | TW | 201210852 | A | 16-03-2012 |
| | | | US | 2013112567 | A1 | 09-05-2013 |
| | | | WO | 2012014774 | A1 | 02-02-2012 |
| JP 2008158293 | A | 10-07-2008 | NONE | | | |
| JP 2014141085 | A | 07-08-2014 | JP | 6427874 | B2 | 28-11-2018 |
| | | | JP | 2014141085 | A | 07-08-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MORTON LEONARD HEILIG ; M. L. PRESENCE.** Teleoperators and Virtual Environments. MIT Press, 1992, vol. 1, 279-294
- **AGARWAL, P. ; SHARMA, D.** How to Prevent Fogging of Spectacle Glasses When Wearing a Face Mask. *Indian J Surg,* 2021, vol. 83, 1609-1610, https://doi.org:10.1007/s12262-021-02729-x
- **INTROZZI, L. et al.** Wetting Enhancer. *Pullulan Coating for Antifog Packaging Applications. Acs Appl Mater Inter4,* 2012, 3692-3700, https://doi.org:10.1021/am300784n
- **LU, X. Y. et al.** Antifogging and antireflective silica film and its application on solar modules. *Surf Coat Tech,* 2011, vol. 206, 1490-1494, https://doi.org:10.1016/j.surfcoat.2011.09.031
- **PARK, J. T. ; KIM, J. H. ; LEE, D.** Excellent anti-fogging dye-sensitized solar cells based on superhydrophilic nanoparticle coatings. *Nanoscale,* 2014, vol. 6, 7362-7368, https://doi.org:10.1039/c4nr00919c
- **SAN-JUAN, M. ; MARTIN, O. ; MIRONES, B. J. ; DE TIEDRA, P.** Assessment of efficiency of windscreen demisting systems in electrical vehicles by using IR thermography. *Appl Therm Eng,* 2016, vol. 104, 479-485, https://doi.org:10.1016/j.applthermaleng.2016.05.093
- **BEYSENS, D. ; KNOBLER, C. M.** Growth of Breath Figures. *Phys Rev Lett,* 1986, vol. 57, 1433-1436, https://doi.org:DOI 10.1103/PhysRevLett.57.1433
- **LIN, S. T. et al.** Stretchable Anti-Fogging Tapes for Diverse Transparent Materials. *Adv Funct Mater,* 2021, vol. 31, https://doi.org:ARTN 210355110.1002/adfm.202103551
- **WANG, X. Q. et al.** A multifunctional and environmentally-friendly method to fabricate superhydrophilic and self-healing coatings for sustainable antifogging. *Chem Eng J,* 2021, vol. 409, https://doi.org:ARTN 12822810.1016/j.cej.2020.128228
- **LAI, Y. K. et al.** Transparent superhydrophobic/superhydrophilic TiO2-based coatings for self-cleaning and anti-fogging. *J Mater Chem,* 2012, vol. 22, 7420-7426, https://doi.org: 10.1039/c2jm 16298a

- **HANG, Z. W. et al.** Active Antifogging Property of Monolayer SiO2 Film with Bioinspired Multiscale Hierarchical Pagoda Structures. *Acs Nano,* 2016, vol. 10, 8591-8602, https://doi.org: 10.1021/acsnano.6b03884
- **DURAN, I. R. ; LAROCHE, G.** Current trends, challenges, and perspectives of anti-fogging technology: Surface and material design, fabrication strategies, and beyond. *Prog Mater Sci,* 2019, vol. 99, 106-186, https://doi.org:10.1016/j.pmatsci.2018.09.001
- **HAN, Z. W. ; FENG, X. M. ; GUO, Z. G. ; NIU, S. C. ; REN, L. Q.** Flourishing Bioinspired Antifogging Materials with Superwettability: Progresses and Challenges. *Adv Mater,* 2018, vol. 30, https://doi.org:ARTN 170465210.1002/adma.201704652
- **WANG, R. et al.** Light-induced amphiphilic surfaces. *Nature,* 1997, vol. 388, 431-432, https://doi.org:Doi 10.1038/41233
- **DRELICH, J. ; CHIBOWSKI, E. ; MENG, D. D. ; TERPILOWSKI, K.** Hydrophilic and superhydrophilic surfaces and materials. *Soft Matter,* 2011, vol. 7, 9804-9828, https://doi.org:10.1039/c1 sm05849e
- **ZUO, Y. X. ; ZHENG, L. Z. ; ZHAO, C. ; LIU, H.** Micro-/Nanostructured Interface for Liquid Manipulation and Its Applications. *Small,* 2020, vol. 16, https://doi.org:ARTN 190384910.1002/smll.201903849
- **BLOSSEY, R.** Self-cleaning surfaces - virtual realities. *Nat Mater,* 2003, vol. 2, 301-306, https://doi.org:10.1038/nmat856
- **MOUTERDE, T. et al.** Antifogging abilities of model nanotextures. *Nat Mater,* 2017, vol. 16, 658, https://doi.org:10.1038/Nmat4868
- **PAPADOPOULOS, P. ; MAMMEN, L. ; DENG, X. ; VOLLMER, D. ; BUTT, H. J.** How superhydrophobicity breaks down. *P Natl Acad Sci USA,* 2013, vol. 110, 3254-3258, https://doi.org:10.1073/pnas.1218673110
- **WANG, D. H. et al.** Design of robust superhydrophobic surfaces. *Nature,* 2020, vol. 582, 55, https://doi.org:10.1038/s41586-020-2331-8
- **LIU, M. J. ; WANG, S. T. ; JIANG, L.** Nature-inspired superwettability systems. *Nat Rev Mater,* 2017, vol. 2, https://doi.org:10.1038/natrevmats.2017.36

- **DONATI, M. et al.** Sprayable Thin and Robust Carbon Nanofiber Composite Coating for Extreme Jumping Dropwise Condensation Performance. *Adv Mater Interfaces,* 2021, vol. 8, https://doi.org:ARTN 200117610.1002/admi.202001176
- **MULROE, M. D. ; SRIJANTO, B. R. ; AHMADI, S. F. ; COLLIER, C. P. ; BOREYKO, J. B.** Tuning Superhydrophobic Nanostructures To Enhance Jumping-Droplet Condensation. *Acs Nano,* 2017, vol. 11, 8499-8510, https://doi.org:10.1021/acsnano.7b04481
- **SHARMA, C. S. ; COMBE, J. ; GIGER, M. ; EMMERICH, T. ; POULIKAKOS, D.** Growth Rates and Spontaneous Navigation of Condensate Droplets Through Randomly Structured Textures. *Acs Nano,* 2017, vol. 11, 1673-1682, https://doi.org:10.1021/acsnano.6b07471
- **OTITOJU, T. A ; AHMAD, A. L. ; OOI, B. S.** Superhydrophilic (superwetting) surfaces: A review on fabrication and application. *J Ind Eng Chem,* 2017, vol. 47, 19-40, https://doi.org:10.1016/j.jiec.2016.12.016
- **LAMBLEY, H. ; SCHUTZIUS, T. M. ; POULIKAKOS, D.** Superhydrophobic surfaces for extreme environmental conditions. *P Natl Acad Sci USA,* 2020, vol. 117, 27188-27194, https://doi.org:10.1073/pnas.2008775117
- **MOUTERDE, T. et al.** Two recipes for repelling hot water. *Nat Commun,* 2019, vol. 10, https://doi.org:ARTN 141010.1038/s41467-019-09456-8
- **TORRES-MAPA, M. L. et al.** Fabrication of a Monolithic Lab-on-a-Chip Platform with Integrated Hydrogel Waveguides for Chemical Sensing. *Sensors-Basel,* 2019, vol. 19, https://doi.org:ARTN 433310.3390/s19194333
- **ZHANG, Z. F. ; MA, X. X. ; WANG, H. B. ; YE, F.** Influence of polymerization conditions on the refractive index of poly( ethylene glycol) diacrylate (PEGDA) hydrogels. *Appl Phys a-Mater,* 2018, vol. 124, https://doi.org:ARTN 28310.1007/s00339-018-1713-3